(19)

Europäisches
Patentamt
European
Patent Office
Office européen
des brevets

(11)   **EP 4 488 550 A1**

(12)   **EUROPEAN PATENT APPLICATION**

(43) Date of publication:
**08.01.2025  Bulletin 2025/02**

(21) Application number: **24185664.0**

(22) Date of filing: **01.07.2024**

(51) International Patent Classification (IPC):
**F16H 49/00** *(2006.01)*

(52) Cooperative Patent Classification (CPC):
**F16H 49/001;** F16H 2049/003

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.07.2023  CN 202321731476 U**
**03.07.2023  CN 202310810893**
**26.01.2024  CN 202410113588**

(71) Applicants:
• **Guangdong Jiya Precision Machinery Technology Co., Ltd**
**Foshan, Guangdong 528000 (CN)**
• **Guangdong Midea Electric Co., Ltd.**
**Foshan, Guangdong 528311 (CN)**

• **Midea Group Co., Ltd.**
**Foshan, Guangdong 528311 (CN)**

(72) Inventors:
• **Jian, Guan**
**Guangdong, 528311 (CN)**
• **Da Qi, Wu**
**Guangdong, 528311 (CN)**
• **Sheng, Zhao**
**Guangdong, 528311 (CN)**
• **Liu Ming, Zhang**
**Guangdong, 528311 (CN)**

(74) Representative: **RGTH**
**Patentanwälte PartGmbB**
**Neuer Wall 10**
**20354 Hamburg (DE)**

(54)   **FLEX SPLINE, HARMONIC GEAR DEVICE, JOINT DEVICE FOR ROBOT, DESIGN METHOD FOR FLEX SPLINE, AND INDUSTRIAL ROBOT**

(57)     A flex spline, a harmonic gear device, a joint device for a robot, a design method for a flex spline, and an industrial robot. The flex spline includes a body portion, including a main body portion and a bottom portion; wherein a through hole is defined on the bottom portion; a tab is formed around the through hole. A first object portion is defined as a part of the bottom portion including a boundary between the rest part of the bottom portion and the tab, and a second object portion is defined as a part of the main body portion including an end portion on a side toward the bottom portion. At least one of the first object portion and the second object portion includes a spline curve. A radius of curvature of the spline curve excludes a discontinuous point.

FIG. 6

EP 4 488 550 A1

Description

## TECHNICAL FIELD

The present disclosure relates to the technical field of flex splines, and in particular to a flex spline, a harmonic gear device, a joint device for a robot, a design method for a flex spline, and an industrial robot.

## BACKGROUND

The harmonic reducer is driven by a wave generator to deform the flex spline in order to make the flex spline mesh with a circular spline (rigid wheel), so as to realize the transmission of motion. Due to the inherent characteristics of the harmonic gear, a mesh region between the flex spline and the circular spline is larger, so as to make its load carrying capacity higher. When the harmonic reducer is in operation, the deformation of the flex spline transmits the torque to a flange part of the flex spline, and the transition region between the flange part and a diaphragm part is prone to form a stress concentration, which results in the damage of the flex spline in the region. The profile line of the transition region usually comprises two arcs, and the continuity of the connection of the two arcs is difficult to deal with; i.e., unreasonable design is likely to cause a large stress concentration, resulting in a short service life of the flex spline, thereby affecting the stability of the harmonic reducer.

In Patent Literature 1, a flexible external gear in a harmonic gear device, especially a small-sized cup-shaped flexible external gear, is disclosed.

The harmonic gear device comprises a rigid internal gear in the shape of a circle, a flexible external gear in the shape of a cup configured concentrically on the inside thereof, and a wave generator embedded in the inside thereof with an elliptical profile. The flexible external gear comprises a flexible cylindrical body portion, a circular diaphragm extending from an end of the cylindrical body portion in the direction of the center axis toward the inner side in the radius direction, a disc-shaped rigid tab continuous with an inner peripheral edge of the diaphragm, and outer teeth formed on a peripheral portion of the other end portion of the cylindrical body portion.

A portion of the cylindrical body portion formed with the outer teeth in the flexible external gear is flexed into an ellipse through the wave generator, and the outer teeth located at the ends in the direction of the long axis of the ellipse are meshed with inner teeth of the rigid internal gear. The two gears have a difference in the teeth number of 2n (n being a positive integer), such that when the wave generator is rotated by a rotary drive source such as a motor, the meshing position of the two gears is shifted in a peripheral direction, and thus the two gears rotate relative to each other corresponding to the difference in the teeth number. Generally, the rigid internal gear is fixed, and a substantially decelerated rotation is output from the flexible external gear.

In this case, an outer end surface contour of the diaphragm of the cup-shaped flexible external gear is defined to comprise a first concave arc of a first radius R1, and a second concave arc of a second radius R2 continuous with the first concave arc. The second radius R2 of the second concave arc is greater than the first radius R1 of the first concave arc.

However, in the flexible external gear of the described shape, since the flexible external gear is repeatedly elastically deformed, especially when used for a long period of time, a stress concentration may be generated on a boundary portion of the first concave arc and the second concave arc of different radii on the surface of the flexible external gear. As a result, damage (cracking or rupture, etc.) may occur starting from the surface of the flexible external gear, and the reliability of the harmonic gear device may be affected. In addition, in order to keep the rate of change of the radius small to avoid stress concentration, it is necessary to set more arcs with different radii on the outer end face contour of the diaphragm, resulting in difficulty in managing the shape of the flexible external gear.

Prior art

Patent Literature 1: Japanese Patent Pub. No.: JP2017141856A

## SUMMARY OF THE DISCLOSURE

The present disclosure provides a flex spline, a harmonic gear device, a joint device for a robot, a design method for a flex spline, and an industrial robot, as set out in the appended set of claims.

Beneficial effects brought about by the present disclosure comprise:

In at least one of the first object portion and the second object portion in which the thickness of the flexible external gear is varied, the object curve contributing to the change in the thickness comprises a smooth curve that does not have points of inflection in which the radius of curvature changes. Therefore, in the flexible external gear, the stress concentration is difficult to be generated in at least one of the first object portion and the second object portion compared to a structure in which a stress concentration may be generated in a boundary portion of a first concave arc and a second concave arc of different radii, as in the related art. As a result, it is difficult to cause damage (cracking or rupture, etc.) starting from the surface of the flexible external gear for the harmonic gear device, with a higher reliability. Moreover, the harmonic gear device is not likely to reduce the reliability even after long-term use, and therefore contributes to the improvement of the transmission efficiency, the extension of the service life, and the improvement of the performance of the harmonic gear device. Moreover, it is not necessary to provide more arcs of different radii on a section (contour) of an outer face as in the related art, and thus it is less difficult to manage the shape in the flexible external gear of the present embodiments.

## BRIEF DESCRIPTION OF THE DRAWINGS

FIG. 1A is a cross-sectional view of a generalized structure of a harmonic gear device according to some embodiments of the present disclosure.

FIG. 1B is an enlarged view of area Z1 in FIG. 1A.

FIG. 2A is a generalized view of the harmonic gear device viewed from an input side of a rotation axis.

FIG. 2B is an enlarged view of area Z2 in FIG. 2A.

FIG. 3A is a generalized exploded perspective view of the harmonic gear device viewed from an output side of the rotation axis.

FIG. 3B is a generalized exploded perspective view of the harmonic gear device viewed from an input side of the rotation axis.

FIG. 4 is a cross-sectional view of a generalized structure of an actuator comprising the harmonic gear device.

FIG. 5 is a cross-sectional view of a generalized structure of a flexible external gear of the harmonic gear device.

FIG. 6 is a generalized structural view of a first object portion of a flexible external gear of the harmonic gear device.

FIG. 7 is a generalized and enlarged view of area Z1 in FIG. 6, showing the structure of the first object portion of the flexible external gear of the harmonic gear device.

FIG. 8 is a generalized diagram showing a process of drawing Bezier curves for specifying the shape of a major portion of the flexible external gear of the harmonic gear device.

FIG. 9 is a diagram showing a simulation stress result of the first object portion of the flexible external gear of the harmonic gear device compared with a comparative example.

FIG. 10 is a generalized structural view of a second object portion of the flexible external gear of the harmonic gear device.

FIG. 11 is a diagram showing a simulation stress result of the second object portion of the flexible external gear of the harmonic gear device compared with a comparative example.

FIG. 12 is a cross-sectional view of a robot comprising the harmonic gear device.

FIG. 13 is a cross-sectional view of a flex spline according to some embodiments of the present disclosure.

FIG. 14 is a cross-sectional view of a flex spline according to other embodiments of the present disclosure.

FIG. 15 is a partially enlarged view of area A in FIG. 13.

FIG. 16 is a cross-sectional view of a harmonic reducer according to other embodiments of the present disclosure.

FIG. 17 is a schematic diagram of a spline curve I.

FIG. 18 is a schematic diagram of a spline curve II.

FIG. 19 is a schematic diagram of a spline curve III.

FIG. 20 is a flowchart of a design method for a flex spline.

## DETAILED DESCRIPTION

Embodiments of the present disclosure are described in detail below, and examples of the embodiments are shown in the accompanying drawings, where same or similar symbols throughout denote same or similar elements or elements having same or similar functions. The embodiments described below by reference to the accompanying drawings are exemplary and are intended solely for the purpose of explaining the present disclosure and are not to be construed as a limitation of the present disclosure.

In the description of the present disclosure, it is to be understood that orientation descriptions, such as up, down, forward, backward, left, right, and the like, which relate to orientation or positional relationships indicated, are based on those shown in the accompanying drawings, which is intended only for the purpose of facilitating the description of the present disclosure and simplifying the description, but not indicates or suggests that the device or element referred to must have a particular orientation, be constructed and be operated with a particular orientation, and thus are not to be construed as limitations of the present disclosure.

In the description of the present disclosure, when there is a description related to terms of "first", "second", etc., it is only for the purpose of distinguishing the technical features and cannot be understood as indicating or implying the relative importance, or implicitly specifying the number of technical features indicated, or implicitly specifying the sequential relationship of the technical features indicated.

In the description of the present disclosure, unless otherwise expressly limited, the terms of "setup", "installation", "connection", and the like shall be broadly construed, and those skilled in the art may reasonably determine the specific meaning of the terms in the present disclosure in conjunction with the specific contents of the technical solution.

**Implementation 1**

(1) Outline

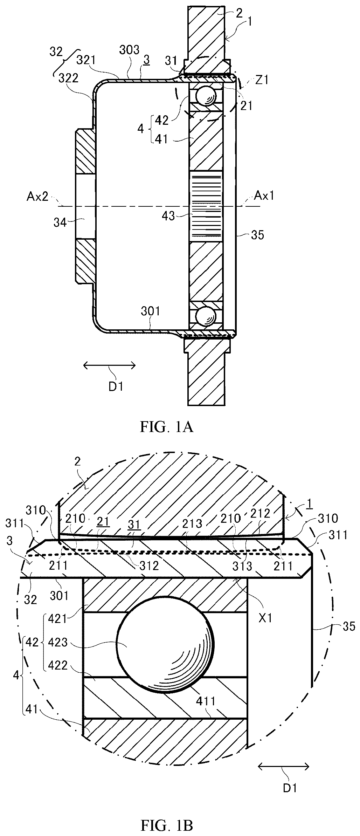

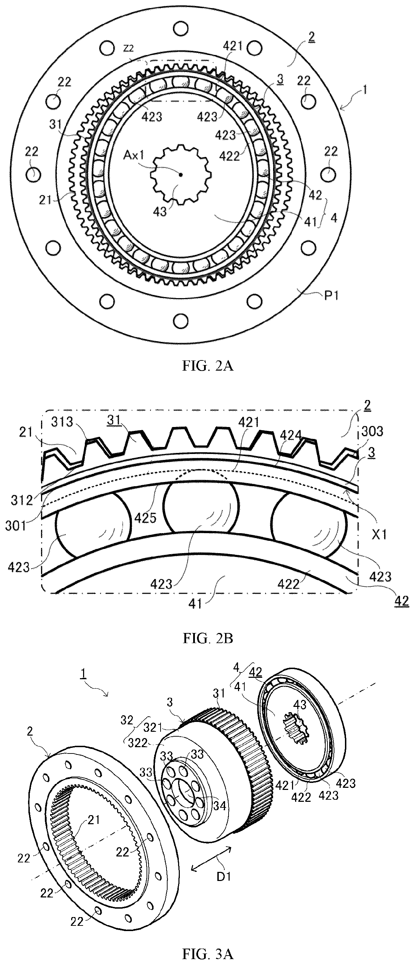

A harmonic gear device 1 is briefly described with reference to FIGS. 1A to 5. The accompanying drawings referred to in the present disclosure are schematic drawings, and the respective ratios of the sizes and thicknesses of the constituent elements in the drawings do not necessarily reflect the actual size ratios. For example, the tooth shapes, sizes, and numbers of teeth, etc. of inner teeth 21 and outer teeth 31 in FIGS. 2A to 3B are merely schematic for the purpose of illustration and not limited to the illustrated shapes.

The harmonic gear device 1 is a gear device comprising a rigid internal gear 2, a flexible external gear 3, and a wave generator 4. The annular flexible external gear 3 is arranged on an inner side of the annular rigid internal gear 2, and the wave generator 4 is arranged on an inner side of the flexible external gear 3. The wave generator 4 can mesh some of outer teeth 31 of the flexible external gear 3 with inner teeth 21 of the rigid internal gear 2, by flexing the flexible external gear 3 into a non-circular shape. When the wave generator 4 rotates, a meshing position of the inner teeth 21 with the outer teeth 31 moves along a peripheral direction of the rigid internal gear 2, such that the flexible external gear 3 produces a relative rotation between the two gears (the rigid internal gear 2 and the flexible external gear 3) corresponding to a difference in the teeth number of the flexible external gear 3 and the rigid internal gear 2. In a case where the rigid internal gear 2 is fixed, the flexible external gear 3 will rotate along with the relative rotation of the two gears. As a result, a rotary output which is decelerated at a relatively high reduction ratio corresponding to the difference in the teeth number of the two gears can be obtained from the flexible external gear 3.

Furthermore, the wave generator 4, which causes the flexible external gear 3 to flex, comprises a bearing 42 and a non-circularly shaped cam 41 to be rotatably driven with a rotation axis Ax1 (refer to FIG. 1A) on an input side as a rotation center. The bearing 42 is arranged between a second outer peripheral surface 411 of the cam 41 and a first inner peripheral surface 301 of the flexible external gear 3. An inner wheel 422 of the bearing 42 is fixed to the second outer peripheral surface 411 of the cam 41, and an outer wheel 421 of the bearing 42 is elastically deformed by being pressed by the cam 41 through a spherical rotating body 423. When the rotating body 423 rolls, the outer wheel 421 can rotate with respect to the inner wheel 422, such that when the non-circularly shaped cam 41 rotates, the rotation of the inner wheel 422 is not transmitted to the outer wheel 421 but instead generates a harmonic motion of the outer teeth 31 of the flexible external gear 3 pressed by the cam 41. By generating the harmonic motion of the outer teeth 31, the meshing position of the inner teeth 21 with the outer teeth 31 moves along the peripheral direction of the rigid internal gear 2, as described above, so as to generate a relative rotation between the flexible external gear 3 and the rigid internal gear 2.

In short, in the harmonic gear device 1, the wave generator 4 comprising the bearing 42 flexes the flexible external gear 3, while realizing a power transmission through the meshing between the inner teeth 21 and the outer teeth 31.

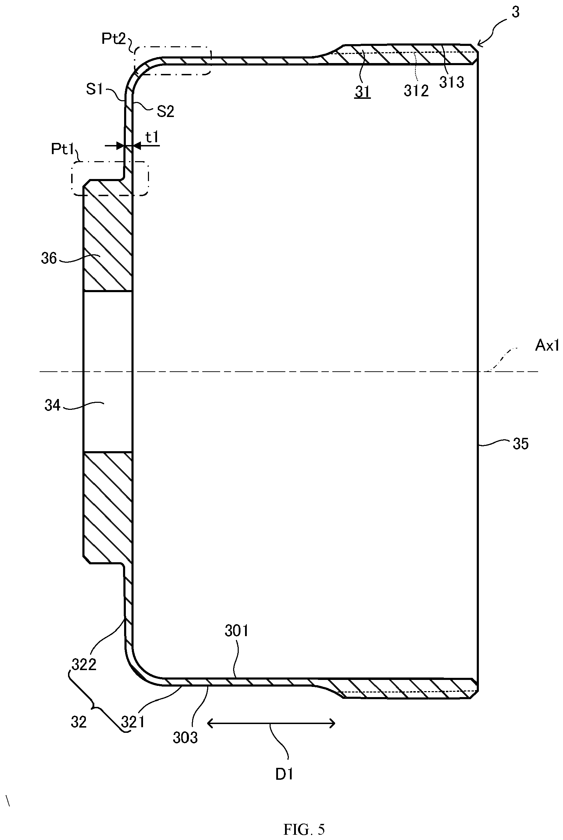

In addition, the flexible external gear 3, also known as a flex spline, is a ring-shaped (annular) element having the outer teeth 31. In the embodiments, as described in FIG. 5, the flexible external gear 3 is a cup-shaped element formed by a metal elastic member (metal plate) with a relatively thin wall thickness. That is, the flexible external gear 3 has flexibility due to its relatively small thickness. The flexible external gear 3 comprises a cup-shaped body portion 32.

Details will be described later. The flexible external gear 3 of the harmonic gear device 1 in the present embodiments is adopted with a structure that is less prone to stress concentration in at least one of a first object portion Pt1 and a second object portion Pt2 in which the thickness t1 of the flexible external gear 3 (body portion 32) changes. That is, the thickness t1 of the flexible external gear 3 is not uniform, and the thickness t1 varies in the first object portion Pt1 and the second object portion Pt2 that are parts of the flexible external gear 3. The flexible external gear 3 is adopted with the structure in which stress concentration is not easily generated in the first object portion Pt1 and/or the second object portion Pt2.

Based on this structure, damage (cracks or ruptures, etc.) starting from a surface of the flexible external gear 3 is less likely to occur, such that the reliability of the harmonic gear device is less likely to be affected. As a result, it is possible to provide a harmonic gear device 1 whose reliability does not deteriorate easily, and the harmonic gear device 1 does not deteriorate easily in reliability even when used for a long period of time, which contributes to the improvement of the transmission efficiency of the harmonic gear device 1, the extension of the service life, and the improvement of the performance.

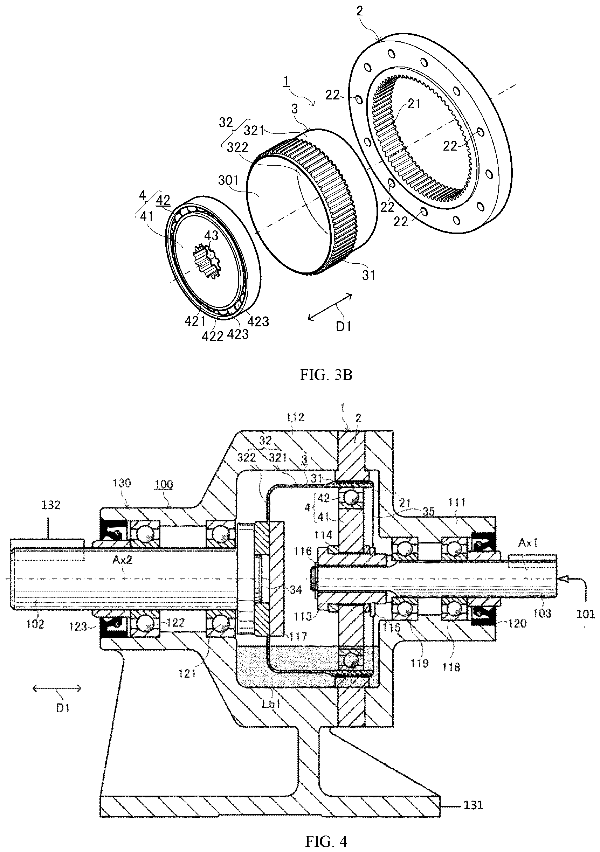

Furthermore, as shown in FIG. 4, the harmonic gear device 1 may constitute an actuator 100 together with a drive source 101 and an output portion 102. In other words, the actuator 100 in the present embodiments comprises the harmonic gear device 1, the drive source 101, and the output portion 102. The drive source 101 is configured to rotate the wave generator 4. The output portion 102 is configured to output a rotational force of either of the rigid internal gear 2 and the flexible external gear 3 as an output.

Furthermore, as shown in FIG. 4, the harmonic gear device 1 may constitute a joint device 130 for a robot together with a first member 131 and a second member 132. In other words, the joint device 130 for a robot in the present embodiments comprises the harmonic gear device 1, the first member 131, and the second member 132. The first member 131 is fixed to the rigid internal gear 2. The second member 132 is fixed to the flexible external gear 3. As a result, the first member 131 and the second member 132 of the robotic joint device 130 are rotated relative to each other in the harmonic gear device 1 by generating a relative rotation between the flexible external gear 3 and the rigid internal gear 2.

The joint device 130 for a robot may have the advantage that the reliability of the harmonic gear device 1 is not easily reduced.

(2) Definition

The term of "annular" in the present disclosure refers to a shape such as a circle (ring) that forms a space (region) surrounded on the inside at least when viewed from the top, and is not limited to a circular shape (ring) that is a square circle when viewed from the top, but may be oval or polygonal, for example. Further, for example, even if the cup-shaped flexible external gear 3 has a bottom portion 322, as long as the main body portion 321 is in the annular shape, the flexible external gear 3 can still be described as annular.

The term of "rigidity" in the present disclosure refers to the property of an object to resist deformation when an external force is applied to the object to deform the object. In other words, an object having rigidity is difficult to deform even when an external force is applied. Furthermore, the term of "flexible" in the present disclosure refers to the property of an object that elastically deforms (flexes) when an external force is applied to the object. In other words, an object having flexibility is prone to elastic deformation when an external force is applied. Therefore, "rigid" and "flexible" have opposite meanings.

In particular, in the present disclosure, "rigidity" of the rigid internal gear 2 and "flexibility" of the flexible external gear 3 are mentioned and used in a relative sense. That is, the "rigidity" of the rigid internal gear 2 means that the rigid internal gear 2 has a relatively high rigidity, i.e., it is difficult to be deformed even when an external force is applied, at least when compared to the flexible external gear 3. Similarly, "flexible" of the flexible external gear 3 means that the flexible external gear 3 is relatively highly flexible, at least compared to the rigid internal gear 2, i.e., it is easy to be elastically deformed when an external force is applied.

Furthermore, in the present disclosure, a side of the rotation axis Ax1 (the right side of FIG. 1A) may be referred to as an "input side", and the other side of the rotation axis Ax1 (the left side of FIG. 1A) is referred to as an "output side". That is, in the example of FIG. 1A, the flexible external gear 3 has an opening surface 35 on the "input side" of the rotation axis Ax1. However, the "input side" and "output side" are merely labels for the purpose of illustration, and are not intended to define a positional relationship between the input and output as viewed from the harmonic gear device 1.

The term of "non-circular shape" in the present disclosure refers to a shape that is not a square circle, and comprises, for example, an elliptical shape, an oblong shape, and the like. In the embodiments, as an example, the non-circularly shaped cam 41 of the wave generator 4 is elliptical. That is, in the embodiment, the wave generator 4 flexes the flexible external gear 3 into an elliptical shape.

The term of "elliptical" in the present disclosure refers to all shapes in which a square circle is flattened and an intersection of the long and short axes orthogonal to each other is located in the center, and it is not limited to curves containing a collection of points whose sum of distances from two fixed points in a plane is fixed, i.e., "ellipses" in the mathematical sense. In other words, the cam 41 in the present embodiments may be either curved like an "ellipse" in the mathematical sense, which contains a collection of points whose sum of distances from two fixed points in a plane is fixed, or elliptical like an oblong circle, which is not an "ellipse" in the mathematical sense. As mentioned above, the accompanying drawings referred to in the present disclosure are schematic, and the respective ratios of the sizes and thicknesses of the constituent elements shown in the drawings do not necessarily reflect the actual size ratios. Therefore, for example, in FIG. 2A, the shape of the cam 41 of the wave generator 4 is provided as a slightly larger elliptical shape, but it is not intended to limit the actual shape of the cam 41.

The term of "rotation axis" in the present disclosure refers to an imaginary axis (straight line) that becomes the rotation central motion of a rotating body. That is, the rotation axis Ax1 is an imaginary axis that is not accompanied by an entity. The wave generator 4 carries out a rotational movement centered on the rotation axis Ax1.

Each of the "inner teeth" and "outer teeth" referred to in the present disclosure is not a single "tooth", but a collection (group) of multiple "teeth". That is, the inner teeth 21 of the rigid internal gear 2 comprise a collection of multiple teeth formed on the inner peripheral surface of the rigid internal gear 2. Similarly, the outer teeth 31 of the flexible external gear 3 comprise a collection of multiple teeth formed on a first outer peripheral surface 303 (referring to FIG. 1A) of the flexible external gear 3.

The term of "parallel" in the present disclosure, in addition to cases where two straight lines in a plane do not intersect each other no matter how far they extend, i.e., where the angle between the two is strictly 0 degrees (or 180 degrees), further refers to a relationship where the angle between the two is within an error of a few degrees (e.g., less than 10 degrees) with respect to 0 degrees. Similarly, the term of "orthogonal" in the present disclosure refers to a relationship in which the angle between the two is within an error of a few degrees (e.g., less than 10 degrees) with respect to 90 degrees, in addition to cases where the angle between the two strictly intersects at 90 degrees.

(3) Structure

The detailed structure of the harmonic gear device 1, the actuator 100, and the joint device 130 for a robot of the present embodiments will be described with reference to FIGS. 1A to 4.

FIG. 1A is a cross-sectional view of a generalized structure of a harmonic gear device according to some embodiments of the present disclosure, FIG. 1B is an enlarged view of area Z1 in FIG. 1A, FIG. 2A is a generalized view of the harmonic gear device viewed from an input side (right side of FIG. 1A) of a rotation axis Ax1, FIG. 2B is an enlarged view of area Z2 in FIG. 2A, FIG. 3A is a generalized exploded perspective view of the harmonic gear device viewed from an output side(left side of FIG. 1A) of the rotation axis Ax1, FIG. 3B is a generalized exploded perspective view of the harmonic gear device viewed from an input side of the rotation axis, and FIG. 4 is a cross-sectional view of a generalized structure of an actuator 100 and a joint device 130 for a robot comprising the harmonic gear device 1.

(3.1) Harmonic gear device

The harmonic gear device 1 of the present embodiments comprises, as described above, a rigid internal gear 2, a flexible external gear 3, and a wave generator 4. In the embodiments, the constituent elements of the harmonic gear device 1, i.e., the rigid internal gear 2, the flexible external gear 3, and the wave generator 4, may be made of a metal such as stainless steel, cast iron, carbon steel for mechanical structure, chromium-molybdenum steel, phosphor bronze, or aluminum bronze, etc. The metal referred to herein comprises a metal to which a surface treatment such as nitriding treatment is applied.

Furthermore, in the embodiments, as an example of the harmonic gear device 1, a cup-shaped harmonic gear device is exemplified. That is, in the harmonic gear device 1 of the embodiments, the flexible external gear 3 formed in the shape of a cup is applied, and the wave generator 4 is received in the flexible external gear 3 in the shape of a cup to be assembled with the flexible external gear 3.

Furthermore, in the embodiments, as an example, the harmonic gear device 1 is used in a state in which the rigid internal gear 2 is fixed to an input side housing 111 (referring to FIG. 4) and an output side housing 112 (referring to FIG. 4), etc. As a result, along with the relative rotation of the rigid internal gear 2 and the flexible external gear 3, the flexible external gear 3 is rotated relatively with respect to the fixing member (input side housing 111, etc.).

Further, in the embodiments, in a case where the harmonic gear device 1 is used for the actuator 100, a rotational force as an input is applied to the wave generator 4, and thus a rotational force as an output is output from the flexible external gear 3. That is, the harmonic gear device 1 is operated with the rotation of the wave generator 4 as the input rotation and the rotation of the flexible external gear 3 as the output rotation. As a result, in the harmonic gear device 1, the output rotation decelerated at a relatively high reduction ratio is obtained with respect to the input rotation.

Further, in the harmonic gear device 1 of the present embodiments, the rotation axis Ax1 on the input side and the rotation axis Ax2 on the output side are located in the same straight line. In other words, the rotation axis Ax1 on the input side and the rotation axis Ax2 on the output side are coaxial. The rotation axis Ax1 on the input side is the rotation center of the wave generator 4 which is given the input rotation, and the rotation axis Ax1 on the output side is the rotation center of the flexible external gear 3 which generates the output rotation. That is, in the harmonic gear device 1, the output rotation decelerated at a relatively high reduction ratio can be obtained on a coaxial axis with respect to the input rotation.

The rigid inner tooth gear 2, also called a circular spline, is a ring-shaped (annular) element having inner teeth 21. In the embodiments, the rigid internal gear 2 has a ring shape, with at least the inner peripheral surface being a square circle when viewed from the top. On the inner peripheral surface of the annular rigid internal gear 2, inner teeth 21 are formed along the peripheral direction of the rigid internal gear 2. Multiple teeth constituting the inner teeth 21 are all of the same shape and are disposed at equal intervals over the entire region of the inner peripheral surface of the rigid internal gear 2 in the peripheral direction. That is, a pitch circle of the inner teeth 21 is a square circle when viewed from the top. Moreover, the rigid inner tooth gear 2 has a specific thickness in the direction of the rotation axis Ax1. The inner teeth 21 are provided extending in the thickness direction of the internal gear 2, and the length of the inner teeth 21 in the thickness direction of the internal gear 2 is the same as the thickness of the internal gear 2. The tooth lines of the inner teeth 21 are all parallel to the rotation axis Ax1.

The rigid inner tooth gear 2 is fixed to the input side housing 111 (referring to FIG. 4) and the output side housing 112 (referring to FIG. 4), etc., as described above. For this purpose, multiple fixing holes 22 for fixing are defined on the rigid internal gear 2 (referring to FIG. 3A and FIG. 3B).

The flexible external gear 3, also called a flex spline, is a ring-shaped (annular) element having outer teeth 31. In the embodiments, the flexible external gear 3 is a cup-shaped element formed by a metal elastic member (metal plate) with a relatively thin wall thickness. That is, the flexible external gear 3 is flexible due to its relatively thin thickness. The flexible external gear 3 comprises a cup-shaped body portion 32, which comprises a main body portion 321 and a bottom portion 322. The main body portion 321 has a cylindrical shape in which at least the first inner peripheral surface 301 is a square circle when viewed from the top in a state in which elastic deformation of the flexible external gear 3 has not yet occurred. A center axis of the main body portion 321 is aligned with the rotation axis Ax1. The bottom portion 322 is arranged on an opening surface of the main body portion 321 and has a disk shape that is a square circle when viewed from the top. Specifically, the bottom portion 322 is arranged on one of the two opening surfaces of the main body portion 321 on the output side of the rotation axis Ax1. According to the above, the body portion 32 is formed into a bottomed cylindrical, i.e., cup-like shape open toward the input side of the rotation axis Ax1, by means of the main body portion 321 and the bottom portion 322. In other words, an opening surface 35 is formed on an end surface on the opposite side to the bottom portion 322 in the direction of the rotation axis Ax1 of the flexible external gear 3. That is, the flexible external gear 3 is in the shape of a cylinder having an opening surface 35 on one of the sides (in this case, the input side of the rotation axis Ax1) in a tooth line direction D1. In the embodiments, the main body portion 321 and the bottom portion 322 are formed integrally by a metal member, thereby realizing a seamless body portion 32.

The wave generator 4 is assembled by embedding the wave generator 4 of a non-circular shape (elliptical shape) on the inner side of the main body portion 321 with respect to the flexible external gear 3. As a result, the flexible external gear 3 is subjected to a radial-direction (a direction orthogonal to the rotation axis Ax1) external force from the wave generator 4 from the inner side to the outer side, and thus elastically deformed into a non-circular shape. In the embodiments, the main body portion 321 of the flexible external gear 3 is elastically deformed into an elliptical shape by assembling the wave generator 4 to the flexible external gear 3. That is, the state in which the flexible external gear 3 has not yet been elastically deformed refers to the state in which the wave generator 4 has not yet been assembled to the flexible external gear 3. Conversely, the state in which the flexible external gear 3 has been elastically deformed refers to the state in which the wave generator 4 has been assembled to the flexible external gear 3.

In more detail, the wave generator 4 is embedded in the first inner peripheral surface 301 of the main body portion 321 at an end portion which is on the opposite side (the input side of the rotation axis Ax1) from the bottom portion 322. In other words, the wave generator 4 is embedded in the end portion of the main body portion 321 of the flexible external gear 3 on the side with the opening surface 35 in the direction of the rotation axis Ax1. Therefore, in the state in which the flexible external gear 3 is elastically deformed, the end portion of the flexible external gear 3 on the side with the opening surface 35 in the direction of the rotation axis Ax1 is deformed more substantially than the end portion on the side with the bottom portion 322, and becomes closer to an elliptical shape. Due to this difference in the amount of deformation in the direction of the rotation axis Ax1, in the state in which the flexible external gear 3 is elastically deformed, the first inner peripheral surface 301 of the main body portion 321 of the flexible external gear 3 comprises a conical surface inclined with respect to the rotation axis Ax1.

Furthermore, the end portion of the first outer peripheral surface 303 (referring to FIG. 1A) of the main body portion 321 that is at least on the opposite side (the input side of the rotation axis Ax1) from the bottom portion 322, is formed with the outer teeth 31 along the peripheral direction of the main body portion 321. In other words, the outer teeth 31 are arranged on the end portion of the main body portion 321 of the flexible external gear 3 that is at least on the side with the opening surface 35 in the direction of the rotation axis Ax1. The multiple teeth constituting the outer teeth 31 are all of the same shape and are disposed at equal intervals over the entire region of the first outer peripheral surface 303 of the flexible external gear 3 in the peripheral direction. That is, a pitch circle of the outer teeth 31 is a square circle when viewed from the top in a state in which the flexible external gear 3 has not yet been elastically deformed. The outer teeth 31 are formed only within a range in which each outer tooth 31 has a fixed width from an end edge of the main body portion 321 on the side with the opening surface 35 (the input side of the rotation axis Ax1). Specifically, the outer teeth 31 are formed on the first outer peripheral surface 303 of at least a portion of the main body portion 321 in which the wave generator 4 is embedded in the direction of the rotation axis Ax1 (the end portion of the opening surface 35). The tooth lines of the outer teeth 31 are all parallel to the rotation axis Ax1.

In short, in the harmonic gear device 1 of the present embodiments, the tooth lines of the inner teeth 21 of the rigid internal gear 2 and the tooth lines of the outer teeth 31 of the flexible external gear 3 are both parallel to the rotation axis Ax1. Thus, in the embodiments, the "tooth line direction D1" is a direction parallel to the rotation axis Ax1. Moreover, the size of the inner tooth 21 in the tooth line direction D1 is the tooth width of the inner tooth 21, and similarly, the size of the outer tooth 31 in the tooth line direction D1 is the tooth width of the outer tooth 31. Therefore, the tooth line direction D1 is synonymous with the tooth width direction.

In the embodiments, the rotation of the flexible external gear 3 is output as an output rotation as described above. For this purpose, an output portion 102 of the actuator 100 is arranged on the flexible external gear 3 (referring to FIG. 4).

Multiple mounting holes 33 are defined on the bottom portion 322 of the flexible external gear 3, for mounting a shaft serving as the output portion 102 and further, a through hole 34 is defined at the center portion of the bottom portion 322. The thickness around the through hole 34 of the bottom portion 322 is greater than the thickness at other portions of the bottom portion 322.

The flexible external gear 3 formed as above is arranged on the inner side of the rigid internal gear 2. Here, the flexible external gear 3 is assembled with the rigid internal gear 2 by inserting only the end portion of the first outer peripheral surface 303 of the main body portion 321 which is on the opposite side (the input side of the rotation axis Ax1) of the bottom portion 322 into the inner side of the rigid internal gear 2. That is, the portion of the main body portion 321 of the flexible external gear 3 in which the wave generator 4 is embedded in the direction of the rotation axis Ax1 (the end portion on the side of the opening surface 35) is inserted to the inner side of the rigid internal gear 2. The outer teeth 31 are formed on the first outer peripheral surface 303 of the flexible external gear 3, and the inner teeth 21 are formed on the inner peripheral surface of the rigid internal gear 2. Therefore, in a state in which the flexible external gear 3 is arranged on the inner side of the rigid internal gear 2, the outer teeth 31 and the inner teeth 21 are disposed opposite to each other.

The teeth number of the inner teeth 21 in the rigid internal gear 2 is 2N (N is a positive integer) greater than the teeth number of the outer teeth 31 of the flexible external gear 3. In the embodiments, as an example, N is 1 and the teeth number (of the outer teeth 31) of the flexible external gear 3 is 2 more than the teeth number (of the inner teeth 21) of the rigid internal gear 2. This difference in the teeth number of the flexible external gear 3 and the rigid internal gear 2 defines the reduction ratio of the output rotation relative to the input rotation in the harmonic gear device 1.

In the embodiments, as an example, as shown in FIG. 1A and FIG. 1B, the relative positions of the flexible external gear 3 and the rigid internal gear 2 in the direction of the rotation axis Ax1 are set such that the center of the tooth line direction D1 of the outer teeth 31 is opposite to the center of the tooth line direction D1 of the inner teeth 21. That is, the center of the tooth line direction D1 of the outer teeth 31 of the flexible external gear 3 and the center of the inner teeth 21 of the rigid internal gear 2 are located at the same position in the direction of the rotation axis Ax1. Moreover, in the embodiments, the size (tooth width) of the tooth line direction D1 of the outer teeth 31 is larger than the size (tooth width) of the tooth line direction D1 of the inner teeth 21. Therefore, in a direction parallel to the rotation axis Ax1, the inner teeth 21 converge within a tooth line range of the outer teeth 31. In other words, the outer teeth 31 protrude out of at least one side of the inner teeth 21 in the tooth line direction D1. In the embodiments, the outer teeth 31 protrude out of both sides (the input side and the output side of the rotation axis Ax1) of the inner teeth 21 in the tooth line direction D1.

In the state in which the flexible external gear 3 has not yet been elastically deformed (the state in which the wave generator 4 has not yet been assembled to the flexible external gear 3), the pitch circle of the outer tooth 31 drawn as a square circle is set to be smaller than the pitch circle of the inner tooth 21 also drawn as a square circle. That is, in the state in which the flexible external gear 3 has not yet been elastically deformed, the outer teeth 31 and the inner teeth 21 are set opposite to each other across a gap without meshing with each other.

On the other hand, in the state in which the flexible external gear 3 is elastically deformed (the state in which the wave generator 4 has been assembled to the flexible external gear 3), the main body portion 321 is flexed into an elliptical shape (non-circular shape), such that the outer teeth 31 of the flexible external gear 3 partially mesh with the inner teeth 21 of the rigid internal gear 2. That is, the main body portion 321 of the flexible external gear 3 (or, at least the end portion of the main body portion 321 on the side with the opening surface 35) is elastically deformed into an elliptical shape, whereby the outer teeth 31 disposed on both ends in the direction of the long axis of the elliptical shape mesh with the inner teeth 21 as shown in FIG. 2A. In other words, the long diameter of the pitch circle of the outer teeth 31 drawn as an ellipse is the same as the diameter of the pitch circle of the inner teeth 21 drawn as a square circle, and the short diameter of the pitch circle of the outer teeth 31 drawn as an ellipse is less than the diameter of the pitch circle of the inner teeth 21 drawn as a square circle. In this way, when the flexible external gear 3 is elastically deformed, some of the teeth constituting the outer teeth 31 meshes with some of the teeth constituting the inner teeth 21. As a result, some of the outer teeth 31 can be made to mesh with some of the inner teeth 21 in the harmonic gear device 1.

The wave generator 4, also referred to as a wave generator, is an element that causes the outer teeth 31 of the flexible external gear 3 to generate a harmonic motion by flexing the flexible external gear 3. In the embodiments, the wave generator 4 is an element having a non-circular peripheral shape, specifically an elliptical shape, when viewed from the top.

The wave generator 4 has a non-circularly shaped (elliptical shape herein) cam 41 and a bearing 42 arranged on a periphery of the cam 41, i.e., the non-circularly shaped cam 41 is embedded in an inner side of an inner wheel 422 of the bearing 42 with respect to the bearing 42 to assemble the cam 41. As a result, the bearing 42 is subjected to a radial-direction (a direction orthogonal to the rotation axis Ax1) external force from the inner wheel 422 from the inner side to the outer side, and thus elastically deformed into a non-circular shape. That is, a state in which the bearing 42 has not yet been elastically deformed refers to a state in which the cam 41 has not yet been assembled to the bearing 42. Conversely, a state in which the bearing 42 has been elastically deformed refers to a state in which the cam 41 has been assembled to the bearing 42.

The cam 41 is a non-circularly shaped (elliptical shaped herein) element that is rotatably driven centered on the input side of the rotation axis Ax1. The cam 41 comprises a second outer peripheral surface 411 (referring to FIG. 1B), and at least the second outer peripheral surface 411 comprises a metal plate that is elliptical in shape when viewed from top. The cam 41 is provided with a specific thickness in the direction of the rotation axis Ax1 (i.e., the tooth line direction D1). As a result, the cam 41 has the same degree of rigidity as the rigid internal gear 2. However, the thickness of the cam 41 is less than the thickness of the rigid internal gear 2. In the embodiments, the rotation of the wave generator 4 is taken as the input rotation as described above. Therefore, an input portion 103 of the actuator 100 is arranged on the wave generator 4 (referring to FIG. 4). A cam hole 43 is defined on a center portion of the cam 41 of the wave generator 4, for mounting a shaft serving as the input portion 103.

The bearing 42 comprises an outer wheel 421, an inner wheel 422, and multiple rotating bodies 423. In the embodiments, as an example, the bearing 42 comprises a deep groove ball bearing, which is adopted with sphere-like balls serving as the rotating bodies 423.

The outer wheel 421 and the inner wheel 422 are ring-shaped (annular) elements. Specifically, each of the outer wheel 421 and the inner wheel 422 is an annular element formed by a metal elastic member (metal plate) with a relatively thin wall thickness. That is, the outer wheel 421 and the inner wheel 422 are each flexible due to their relatively small thickness. In the embodiments, each of the outer wheel 421 and the inner wheel 422 has a circular shape, which is a square circle when viewed from the top, in the state in which the bearing 42 has not yet been elastically deformed (the state in which the cam 41 has not yet been assembled to the bearing 42). The inner wheel 422 is smaller than the outer wheel 421 and is arranged on the inner side of the outer wheel 421. Since the inner diameter of the outer wheel 421 is greater than the outer diameter of the inner wheel 422, a gap exists between a second inner peripheral surface 425 of the outer wheel 421 and the outer peripheral surface of the inner wheel 422.

The multiple rotating bodies 423 are arranged within the gap between the outer wheel 421 and the inner wheel 422. The multiple rotating bodies 423 are distributed along a peripheral direction of the outer wheel 421. The multiple rotating bodies 423 are all metallic balls (spheres) of the same shape and are disposed at equal intervals over the entire region of the outer wheel 421 in the peripheral direction. Although not particularly illustrated herein, the bearing 42 further comprises a cage by which the multiple rotating bodies 423 are retained between the outer wheel 421 and the inner wheel 422.

Furthermore, in the embodiments, as an example, the outer wheel 421 and the inner wheel 422 have sizes in the width direction (the direction parallel to the rotation axis Ax1) that are the same as the thickness of the cam 41. That is, the sizes of the outer wheel 421 and the inner wheel 422 in the width direction are smaller than the thickness of the rigid internal gear 2.

With the aid of such bearing 42, by assembling the cam 41 to the bearing 42, the inner wheel 422 of the bearing 42 is fixed to the cam 41, and the inner wheel 422 is elastically deformed into an elliptical shape along the peripheral shape of the cam 41. In this case, the outer wheel 421 of the bearing 42 is elastically deformed into an elliptical shape by being pressed by the inner wheel 422 via the multiple rotating bodies 423. Therefore, the outer wheel 421 and the inner wheel 422 of the bearing 42 are each elastically deformed into an elliptical shape. In the state in which the bearing 42 is elastically deformed (the state in which the cam 41 is assembled to the bearing 42), the outer wheel 421 and the inner wheel 422 are in the shape of an ellipse that is similar to each other.

Even in the state in which the bearing 42 is elastically deformed, since the multiple rotating bodies 423 are sandwiched between the outer wheel 421 and the inner wheel 422, the gap between the outer wheel 421 and the inner wheel 422 remains substantially constant over the entire periphery of the outer wheel 421. Moreover, in this state, by rolling the plurality of rotating bodies 423 between the outer wheel 421 and the inner wheel 422, the outer wheel 421 is able to rotate relatively with respect to the inner wheel 422. Therefore, in the state in which the bearing 42 is elastically deformed, when the cam 41 is rotated with the rotation axis Ax1 as the center, the rotation of the cam 41 is not transmitted to the outer wheel 421, and the elastic deformation of the inner wheel 422 is transmitted to the outer wheel 421 via the multiple rotating bodies 423. That is, in the wave generator 4, when the cam 41 is rotated with the rotation axis Ax1 as the center, the outer wheel 421 elastically deforms in a manner to cause the long axis of the elliptical shape formed by the outer wheel 421 to rotate with the rotation axis Ax1 as the center. Therefore, with respect to the wave generator 4 as a whole, when viewed from the input side of the rotation axis Ax1, the peripheral shape of the elliptical-shaped wave generator 4 changes with the rotation of the cam 41, such that the long axis thereof rotates with the rotation axis Ax1 as the center.

The wave generator 4 formed as above is arranged on the inner side of the flexible external gear 3. Here, the flexible external gear 3 is assembled with the wave generator 4 by embedding only the end portion of the first inner peripheral surface 301 of the main body portion 321 which is on the opposite side (the side with the opening surface 35) of the bottom portion 322 to the wave generator 4. In this case, the bearing 42 of the wave generator 4 is arranged between the second outer peripheral surface 411 of the cam 41 and the first inner peripheral surface 301 of the flexible external gear 3. The outer diameter of the outer wheel 421 in the state in which the bearing 42 has not yet been elastically deformed (the state in which the cam 41 has not yet been assembled to the bearing 42) is the same as the inner diameter of the flexible external gear 3 (the main body portion 321) in the state in which the flexible external gear 3 has not yet been elastically deformed. Accordingly, a third outer peripheral surface 424 (referring to FIG. 2B) of the outer wheel 421 in the wave generator 4 is provided in contact with the first inner peripheral surface 301 of the flexible external gear 3 throughout the entire periphery of the bearing 42 in the peripheral direction. As a result, in the state in which the flexible external gear 3 is elastically deformed (the state in which the wave generator 4 is assembled to the flexible external gear 3), the main body portion 321 is flexed into an elliptical shape (non-circular shape). In this state, the flexible external gear 3 is fixed relative to the outer wheel 421 of the bearing 42.

However, since the flexible external gear 3 and the wave generator 4 are merely embedded, the flexible external gear 3 is not completely fixed with respect to the outer wheel 421 of the bearing 42. As a result, as described above, a slight gap X1 exists between the flexible external gear 3 and the outer wheel 421 embedded to the inner side of the flexible external gear 3 (referring to FIG. 1B). Strictly speaking, since the diameter of the third outer peripheral surface 424 of the outer wheel 421 is slightly less than the diameter of the first inner peripheral surface 301 of the flexible external gear 3, the gap X1 between the outer wheel 421 and the flexible external gear 3 will not be completely filled, and the gap X1 is thus generated at least partially. Moreover, due to the effect of the gap X1, the outer wheel 421 and the flexible external gear 3 are elastically deformed in conjunction with the rotation of the cam 41 of the wave generator 4, and a relative rotation occurs between the outer wheel 421 and the flexible external gear 3. The relative rotation is, for example, about one-thousandth or one-hundredth of the rotation speed of the cam 41. Due to such relative rotation, the outer wheel 421 rubs against the flexible external gear 3, which is a cause of wear loss.

The term of "gap" in the present disclosure refers to a space that may be created between opposing surfaces of two objects, and even if the two objects are not separated, a gap may still exist between them. In other words, even if the two objects are in contact, a small gap may still exist between the two objects. Between the flexible external gear 3 and the outer wheel 421 embedded to the inner side of the flexible external gear 3, a gap X1 exists between the third outer peripheral surface 424 of the outer wheel 421 and the first inner peripheral surface 301 of the flexible external gear 3 that are opposite to each other. Basically, since the third outer peripheral surface 424 of the outer wheel 421 is in contact with the first inner peripheral surface 301 of the flexible external gear 3, a large gap X1 will not be generated between the two. Therefore, the gap X1 between the outer wheel 421 and the flexible external gear 3 is a tiny gap that may be locally generated between the third outer peripheral surface 424 of the outer wheel 421 and the first inner peripheral surface 301 of the flexible external gear 3. As an example, the gap X1 is microscopically generated to the extent that a lubricant Lb1 is permeable between the third outer peripheral surface 424 of the outer wheel 421 and the first inner peripheral surface 301 of the flexible external gear 3.

In the harmonic gear device 1 as above, as shown in FIG. 2A, the main body portion 321 of the flexible external gear 3 is flexed into an elliptical shape (a non-circular shape), thereby the outer teeth 31 of the flexible external gear 3 partially mesh with the inner teeth 21 of the rigid internal gear 2. That is, by the flexible external gear 3 (the main body portion 321) being elastically deformed into an elliptical shape, the outer teeth 31 of the elliptical shape at the two ends in the direction of the long axis of the elliptical shape mesh with the inner teeth 21. Moreover, when the cam 41 is rotated with the rotation axis Ax1 as the center, the rotation of the cam 41 is not transmitted to the outer wheel 421 and the flexible external gear 3, and the elastic deformation of the inner wheel 422 is transmitted to the outer wheel 421 and the flexible external gear 3 through the multiple rotating bodies 423. Therefore, the peripheral shape of the elliptical flexible external gear 3 viewed from the input side of the rotation axis Ax1 changes in response to the rotation of the cam 41, such that the long axis thereof is rotated with the rotation axis Ax1 as the center.

As a result, the outer teeth 31 formed on the first outer peripheral surface 303 of the flexible external gear 3 generate a harmonic motion. By generating the harmonic motion of the outer teeth 31, the meshing position of the inner teeth 21 with the outer teeth 31 moves in the peripheral direction of the rigid internal gear 2, generating a relative rotation between the flexible external gear 3 and the rigid internal gear 2. That is, the outer teeth 31, that are at two ends of the elliptical shape formed by (the main body portion 321 of) the flexible external gear 3 in the direction of the long axis, mesh with the inner teeth 21, such that the meshing positions of the inner teeth 21 and the outer teeth 31 are shifted through the rotation of the long axis of the elliptical shape centered on the rotation axis Ax1. In this way, the harmonic gear device 1 deforms the flexible external gear 3 in conjunction with the rotation of the wave generator 4 centered on the rotation axis Ax1, such that some of the outer teeth 31 meshes with some of the inner teeth 21, and thus the flexible external gear 3 rotates corresponding to the difference in the teeth number with the rigid internal gear 2.

Furthermore, in the harmonic gear device 1, as described above, the difference in the teeth number of the flexible outer tooth gear 3 and the rigid inner tooth gear 2 specifies the reduction ratio of the output rotation in the harmonic gear device 1 with respect to the input rotation. That is, when the teeth number of the rigid internal gear 2 is set to "V1" and the teeth number of the flexible external gear 3 is set to "V2", the reduction ratio R1 is expressed in the following equation 1.

$$R1=V2/(V1-V2) \qquad\qquad\qquad (Equation\ 1)$$

In short, the less the difference in the teeth number (V1-V2) between the rigid internal gear 2 and the flexible external gear 3, the greater the reduction ratio R1. As an example, when the teeth number V1 of the rigid internal gear 2 is 72 and the teeth number V2 of the flexible external gear 3 is 70, where the difference in the teeth number (V1-V2) is 2, then according to the Equation 1, the reduction ratio R1 is 35. In this case, when the cam 41 is rotated clockwise by 1 revolution (360 degrees) with the rotation axis Ax1 as the center when viewed from the input side of the rotation axis Ax1, the flexible external gear 3 is rotated counterclockwise with the rotation axis Ax1 as the center with a rotation amount difference corresponding the difference in the teeth number of 2 (i.e., 10.3 degrees).

According to the harmonic gear device 1 of the present embodiments, such a high reduction ratio R1 can be realized by combining the 1-stage gears (the rigid internal gear 2 and flexible external gear 3).

Furthermore, it is sufficient for the harmonic gear device 1 to comprise at least the rigid internal gear 2, the flexible external gear 3, and the wave generator 4, and the harmonic gear device 1 may further comprise a spline shaft liner 113 or the like, as described in the column "(3.2) Actuator".

The tooth line trimming of the inner teeth 21 and the outer teeth 31 in the embodiments will be described in the following.

As a premise, the inner tooth 21 comprises a first tooth root 212 and a first tooth top 213 as shown in FIG. 1B. The inner teeth 21 are arranged on the inner peripheral surface of the rigid internal gear 2, and thus the first tooth root 212 of the inner tooth 21 corresponds to the inner peripheral surface of the rigid internal gear 2, and the first tooth top 213 protrudes from the inner peripheral surface of the rigid internal gear 2 toward an inner side (i.e., the center/middle portion of the rigid internal gear 2).

On the other hand, the outer teeth 31 comprises a second tooth root 312 and a second tooth top 313 as shown in FIG. 1B. The outer teeth 31 are arranged on the first outer peripheral surface 303 of the flexible external gear 3 (the main body portion 321), and thus the second tooth root 312 of the outer tooth 31 corresponds to the first outer peripheral surface 303 of the flexible external gear 3 (the main body portion 321), and the second tooth top 313 protrudes from the first peripheral surface of the flexible external gear 3 (the main body portion 321) toward an outer side.

In the meshing position of the inner tooth 21 and the outer tooth 31, the inner tooth 21 and the outer tooth 31 mesh with each other such that the second tooth top 313 of the outer tooth 31 is inserted between adjacent first tooth tops 213 of adjacent inner teeth 21. In this case, the second tooth top 313 of the outer tooth 31 is oriented toward the first tooth root 212 of the inner tooth 21, and the first tooth top 213 of the inner tooth 21 is oriented toward the second tooth root 312 of the outer tooth 31. Ideally, a tiny gap is ensured between the first tooth root 212 of the inner tooth 21 and the second tooth top 313 of the outer tooth 31, and between the second tooth root 312 of the outer tooth 31 and the first tooth top 213 of the inner tooth 21. In this state, the tooth surfaces of the inner tooth 21 and the outer tooth 31 which are opposite to each other in the tooth thickness direction contact each other, and power transmission between the rigid internal gear 2 and the flexible external gear 3 is carried out.

Further, a first chamfered portion 211 is arranged at each of both ends of the inner tooth 21 in the tooth line direction D1. The first chamfered portion 211 is a C-surface that reduces a protruding amount of the inner tooth 21 in the tooth line direction D1, and is a portion that basically does not contribute to the meshing of the inner teeth 21 with the outer teeth 31. That is, the first chamfered portion 211 of the inner tooth 21 does not contact the outer tooth 31 even at the position where the inner tooth 21 meshes with the outer tooth 31. Similarly, a second chamfered portion 311 is arranged at each of both ends of the outer tooth 31 in the tooth line direction D1. The second chamfered portion 311 is a C-surface that reduces a protruding amount of the outer tooth 31 in the tooth line direction D1, and is a portion that basically does not contribute to the meshing of the inner teeth 21 with the outer teeth 31. That is, the second chamfered portion 311 of the outer tooth 31 does not contact the inner tooth 21 even at the position where the inner tooth 21 meshes with the outer tooth 31.

In the embodiments, the inner tooth 21 of the rigid internal gear 2 comprises a first tooth line trimming portion 210. That is, the harmonic gear device 1 conducts at least a tooth line trimming for the inner tooth 21. The first tooth line trimming portion 210 is arranged on at least one end of the inner tooth 21 in the tooth line direction D1. In other words, the inner tooth 21 comprises the first tooth line trimming portion 210 on at least one end in the tooth line direction D1 of the inner tooth 21. In the embodiments, the first tooth line trimming portion 210 is arranged on each of both ends of the inner tooth 21 in the tooth line direction D1.

Furthermore, in the embodiments, the outer tooth 31 of the flexible external gear 3 correspondingly comprises a second tooth line trimming portion 310. That is, the harmonic gear device 1 conducts a tooth line trimming not only for the inner tooth 21 but also for the outer tooth 31. The first tooth line trimming portion 210 is arranged on at least one end of the outer tooth 31 in the tooth line direction D1. In other words, the outer tooth 31 comprises the second tooth line trimming portion 310 on at least one end in the tooth line direction D1. In the embodiments, the second tooth line trimming portion 310 is arranged on each of both ends of the outer tooth 31 in the tooth line direction D1.

In this way, in the harmonic gear device 1 of the present embodiments, at least one of the inner teeth 21 and at least one of the outer teeth 31 comprise a first tooth line trimming portion 210 and a second tooth line trimming portion 310, respectively. The first tooth line trimming portion 210 and the second tooth line trimming portion 310 make it less likely to generate a stress concentration due to excessive clashing between the inner teeth 21 and the outer teeth 31, thereby ameliorating the clashing between the inner teeth 21 and the outer teeth 31. As a result, foreign matter caused by defects or wear due to the contact between the inner teeth 21 and the outer teeth 31 is less likely to be generated, and the harmonic gear device 1 whose reliability is not less likely to be reduced may be realized.

(3.2) Actuator

The structure of the actuator 100 will be described in further detail.

The actuator 100 of the present embodiments, as shown in FIG. 4, is arranged with the harmonic gear device 1, the drive source 101, and the output portion 102. That is, the actuator 100 comprises the drive source 101 and the output portion 102, in addition to the rigid internal gear 2, the flexible external gear 3, and the wave generator 4 that constitute the harmonic gear device 1. Furthermore, the actuator 100 further comprises an input portion 103, an input side housing 111, an output side housing 112, a spline shaft liner 113, a spacer 114, a first snap 115, a second snap 116, and a mounting plate 117, in addition to the harmonic gear device 1, the drive source 101, and the output portion 102. Moreover, in the present embodiments, the actuator 100 further comprises a first input side bearing 118, a second input side bearing 119, an input side oil seal 120, a first output side bearing 121, a second output side bearing 122, and an output side oil seal 123.

In the embodiments, the material of the elements of the actuator 100 other than the drive source 101, the input side oil seal 120, and the output side oil seal 123 may be a metal such as stainless steel, cast iron, carbon steel for mechanical structure, chromium-molybdenum steel, phosphor bronze, or aluminum bronze, etc.

The drive source 101 is a power generation source such as a motor (electric motor). The power generated by the drive source 101 is transmitted to the cam 41 of the wave generator 4 in the harmonic gear device 1. Specifically, the drive source 101 is connected to a shaft as the input portion 103, and the power generated by the drive source 101 is transmitted to the cam 41 via the input portion 103. As a result, the drive source 101 can rotate the cam 41.

The output portion 102 is a cylindrical shaft arranged along the rotation axis Ax2 on the output side. The center axis of a shaft as the output portion 102 is aligned with the rotation axis Ax2. The output portion 102 is retained by the output side housing 112 to be able to rotate centered on the rotation axis Ax2. The output portion 102 is fixed to the bottom portion 322 of the body portion 32 in the flexible external gear 3 and can rotate with the flexible external gear 3 centered on the rotation axis Ax2. That is, the output portion 102 can output the rotational force of the flexible external gear 3 as an output.

The input portion 103 is a cylindrical shaft arranged along the rotation axis Ax1 on the input side. The center axis of the shaft as the input portion 103 is aligned with the rotation axis Ax1. The input portion 103 is retained by the input side housing 111 to be able to rotate centered on the rotation axis Ax1. The input portion 103 is arranged on the cam 41 of the wave generator 4 and can rotate with the cam 41 centered on the rotation axis Ax1. That is, the input portion 103 transmits the power (rotational force) generated by the drive source 101 as an input to the cam 41. In the present embodiments, as described above, the rotational axis Ax1 on the input side is located in the same straight line as the rotational axis Ax2 on the output side, and therefore, the input portion 103 is located in a coaxial line with the output portion 102.

The input side housing 111 can retain the input portion 103 in a manner in which the input portion 103 is rotatable by means of the first input side bearing 118 and the second input side bearing 119. A pair of the first input side bearing 118 and the second input side bearing 119 are disposed in a spaced-apart arrangement along the rotation axis Ax1. In the embodiments, the shaft as the input portion 103 runs through the input side housing 111, and a front end portion of the input portion 103 protrudes from an end surface (right end surface in FIG. 4) on the input side of the rotation axis Ax1 in the input side housing 111. A gap between the end surface on the input side of the rotation axis Ax1 in the input side housing 111 and the input portion 103 is sealed by the input side oil seal 120.

The output side housing 112 can retain the output portion 102 in a manner in which the output portion 102 is rotatable by means of the first output side bearing 121 and the second output side bearing 122. A pair of the first output side bearings 121 and the second output side bearings 122 are disposed in a spaced-apart arrangement along the rotation axis Ax2. In the embodiments, the shaft as the output portion 102 runs through the output side housing 112, and a front end portion of the output portion 102 protrudes from an end surface (left end surface in FIG. 4) on the output side of the rotation axis Ax1 in the output side housing 112. A gap between the end surface on the output side of the rotation axis Ax1 in the output side housing 112 and the output portion 102 is sealed by the output side oil seal 123.

As shown in FIG. 4, the input side housing 111 and the output side housing 112 are assembled with each other in a state in which the rigid internal gear 2 of the harmonic gear device 1 is clamped from both sides in a direction parallel to the rotation axis Ax1, i.e., in the toothing line direction D1. Specifically, the input side housing 111 contacts the rigid internal gear 2 from the input side of the rotation axis Ax1, and the output side housing 112 contacts the rigid internal gear 2 from the output side of the rotation axis Ax1. In this way, the input side housing 111, in the state in which the rigid internal gear 2 is clamped between the input side housing 111 and the output side housing 112, is tightly fixed to the output side housing 112 by means of the multiple fixing holes 22 using screws (bolts). As a result, the input side housing 111, the output side housing 112, and the rigid internal gear 2 are integrated with each other. In other words, the rigid internal gear 2, the input side housing 111, and the output side housing 112 together form an outer contour of the actuator 100.

The spline shaft liner 113 is a barrel-shaped element for connecting the shaft as the input portion 103 to the cam 41. The spline shaft liner 113 is inserted into the cam hole 43 defined on the cam 41, and the shaft as the input portion 103 is inserted into the spline shaft liner 113 in a manner that penetrates the spline shaft liner 113. The spline shaft liner 113 is limited in movement with respect to both the cam 41 and the input portion 103 in a rotation direction of centered on the rotation axis Ax1, and is movable with respect to the input portion 103 at least in a direction parallel to the rotation axis Ax1. As a result, a spline link structure is realized as a link structure between the input portion 103 and the cam 41. In this way, the cam 41 is movable relative to the input portion 103 along the rotation axis Ax1 and rotates with the input portion 103 with the rotation axis Ax1 as the center.

The spacer 114 is an element that fills a gap between the spline shaft liner 113 and the cam 41. The first snap 115 is an element for preventing the spline shaft liner 113 from falling off from the cam 41. The first snap 115, for example, comprises an E-shaped ring arranged in the spline shaft liner 113 at a position observed from the cam 41 as the input side of the rotation axis Ax1. The second snap 116 is an element for preventing the input portion 103 from falling out from the spline shaft liner 113. The second snap 116, for example, comprises an E-shaped ring arranged on the input portion 103 in a manner that contacts the spline shaft liner 113 from the output side of the rotation axis Ax1.

The mounting plate 117 is an element for mounting the shaft as the output portion 102 to the bottom portion 322 of the flexible external gear 3. Specifically, the mounting plate 117 is fixed to a flange portion by screws (bolts) through the multiple mounting holes 33 in a state in which a peripheral portion of the through hole 34 on the bottom portion 322 is sandwiched between the mounting plate 117 and the flange portion of the output portion 102. As a result, the shaft as the output portion 102 is fixed to the bottom portion 322 of the flexible external gear 3.

In addition, in the embodiments, a lubricant Lb1 is enclosed on an inner side of the outer contour of the actuator 100 comprising the input side housing 111, the output side housing 112, and the rigid internal gear 2. That is, in a space enclosed by the input side housing 111, the output side housing 112, and the rigid internal gear 2, there is a "lubricant reservoir" that can store the lubricant Lb1 in liquid or gel form.

That is, in the harmonic gear device 1 of the present embodiments, the lubricant Lb1 in liquid or gel form is injected, for example, between the meshing portion of the inner tooth 21 and the outer tooth 31 and between the outer wheel 421 and the inner wheel 422 of the bearing 42, etc. As an example, the lubricant Lb1 is a lubricant oil in liquid form. Moreover, the lubricant Lb1 further enters the gap X1 between the outer wheel 421 (third outer peripheral surface 424) of the bearing 42 and the flexible external gear 3 when the harmonic gear device 1 is in use.

In the embodiments, as an example, as shown in FIG. 4, the lubricant Lb1 is stored only in a lower portion (in the vertical direction) of the outer contour of the actuator 100, such that the liquid level of the lubricant Lb1 is located farther below the lower ends of the first output side bearing 121 and the second output side bearing 122. Thus, in the state of FIG. 4, only a portion of the outer tooth 31 and the outer wheel 421 of the bearing 42 and the like in the rotation direction is immersed in the lubricant Lb1. When the output portion 102 rotates in conjunction with the rotation of the input portion 103, the outer wheel 421 as well as the flexible external gear 3 also rotate around the rotation axis Ax1, and thus the entirety of the outer teeth 31 as well as the outer wheel 421 of the bearing 42 etc. in the rotation direction will be immersed in the lubricant Lb1.

(3.3) Joint device for robot

The structure of the joint device 130 for a robot will be described in further detail.

The joint device 130 of the present embodiments, as shown in FIG. 4, is arranged with the harmonic gear device 1, a first member 131, and a second member 132. That is, the joint device 130 comprises the first member 131 and the second member 132 in addition to the rigid internal gear 2, the flexible external gear 3, and the wave generator 4 that constitute the harmonic gear device 1.

The first member 131 is an element fixed to the rigid internal gear 2, and the second member 132 is an element fixed to the flexible external gear 3. Therefore, in the harmonic gear device 1, by generating a relative rotation between the flexible external gear 3 and the rigid internal gear 2, a relative rotation will also be generated between the first member 131 and the second member 132. In this way, the joint device 130 constitutes a bonding portion where two or more members (the first member 131 and the second member 132) are connected (movably connected) in a state in which they are movable to each other through the harmonic gear device 1.

In this case, it is sufficient for the first member 131 and the second member 132 to be fixed directly or indirectly with respect to the rigid internal gear 2 and the flexible external gear 3, respectively. In the example of FIG. 4, the first member 131 is coupled to the output side housing 112, and is thus indirectly coupled (fixed) with respect to the rigid internal gear 2. Similarly, the second member 132 is coupled to the output portion 102, and is thus indirectly coupled (fixed) with respect to the flexible external gear 3.

In the joint device 130 for a robot, when, for example, the cam 41 of the wave generator 4 is rotated by the power generated by the drive source 101, a relative rotation is generated between the flexible external gear 3 and the rigid internal gear 2. Moreover, along with the relative rotation of the flexible external gear 3 and the rigid internal gear 2, a relative rotation is generated between the first member 131 and the second member 132 centered on the rotation axis Ax2 on the output side (coaxial with the rotation axis Ax1 on the input side). As a result, according to the joint device 130, the first member 131 and the second member 132 connected by the harmonic gear device 1 can be driven to rotate relative to each other centered on the rotation axis Ax1. In this way, the joint device 130 can realize a joint mechanism for various robots.

(4) Detailed structure of flexible external gear

The structure of the flexible external gear 3 of the harmonic gear device 1 in the present embodiments is described in more detail with reference to FIGS. 5 to 11.

(4.1) Overall structure of flexible external gear

As described above, the flexible external gear 3 of the harmonic gear device 1 in the present embodiments has a body portion 32, which is formed from a metal elastic member (metal plate) with a relatively thin wall thickness into a cylinder (cup) having an opening surface 35 on a side in the toothing line direction D1 (in this case, on the input side of the rotation axis Ax1). The body portion 32, as shown in FIG. 5, has a cylindrical body portion 321 with a disk-shaped bottom portion 322.

Outer teeth 31 are formed on an end of a first outer peripheral surface 303 of the main body portion 321 on the side with the opening surface 35 (the input side of the rotation axis Ax1). A circularly shaped through hole 34 is defined on a central portion of the bottom portion 322 along the rotation axis Ax1 running through the bottom portion 322, and a tab 36, which is thicker than the rest of the bottom portion 322, is formed around the through hole 34 of the bottom portion 322. The tab 36 has a circular shape centered on the center (rotation axis Ax1) of the bottom portion 322. The tab 36 has a sufficiently large thickness compared to parts other than the tab 36 of the bottom portion 322 to have a rigidity sufficient to secure the output portion 102. Multiple mounting holes 33 are defined on the tab 36, and the multiple mounting holes 33 pass through the tab 36 (bottom portion 322) along the rotation axis Ax1, respectively (referring to FIG. 3A).

With such a structure, the flexible external gear 3 is fixed relative to the output portion 102 in a state in which the tab 36 around the through hole 34 on the bottom portion 322 is sandwiched between the mounting plate 117 and the flange portion of the output portion 102 (referring to FIG. 4). That is, the tab 36 is fixed in a state clamped between the mounting plate 117 and the flange portion of the output portion 102 by fastening screws (bolts) through the multiple mounting holes 33 on the tab 36. As a result, the shaft as the output portion 102 is fixed to the tab 36 on the bottom portion 322 of the flexible external gear 3.

In addition, the thickness t1 of the parts of the body portion 32 (the main body portion 321 and the bottom portion 322) of the flexible external gear 3 other than the outer teeth 31 and the tab 36 is set small (thin enough) to make the flexible external gear 3 sufficiently flexible.

As shown in FIG. 5, in a case where an outwardly facing face of the cup-shaped flexible external gear 3 is defined as an outer face S1 and an inwardly facing face is defined as an inner face S2, the thickness t1 referred to herein is the distance between the outer face S1 and the inner face S2. The outer face S1 contains surfaces of the first outer peripheral surface 303 and the bottom portion 322 of the main body portion 321 facing the output side (left side in FIG. 5) of the rotation axis Ax1. The inner face S2 contains surfaces of the first inner peripheral surface 301 and the bottom portion 322 of the main body portion 321 facing the input side (right side in FIG. 5) of the rotation axis Ax1.

However, the thickness t1 of the flexible external gear 3 (i.e., the parts other than the outer teeth 31 and the tab 36) may be not uniform in the whole, but varies locally. As shown in FIG. 5, the flexible external gear 3 in the present embodiments comprises a first object portion Pt1 and a second object portion Pt2, and each of the first object portion Pt1 and the second object portion Pt2 has a varied thickness t1.

The first object portion Pt1 is a part of the bottom portion 322 containing a boundary between a portion other than the tab 36 (around the tab 36) and the tab 36. The bottom portion 322 is configured such that the thickness t1 of the first object portion Pt1 becomes greater (gradually increases) while approaching the tab 36. In the embodiments, the first object portion Pt1 continuously varies the distance between the outer face S1 and the inner face S2, i.e., the thickness t1, by setting the outer face S1 as a curved surface. The portion of the bottom portion 322 other than the tab 36 (around the tab 36) is formed with a tapered surface in which the outer face S1 is inclined with respect to the inner face S2, such that the thickness t1 gradually increases toward the center side (toward the tab 36). Moreover, an inner peripheral edge of the tapered surface is continuous with the tab 36 via the curved outer face S1 of the first object portion Pt1.

The second object portion Pt2 is a part of the main body portion 321 containing an end portion on a side toward the bottom portion 322 (the output side of the rotation axis Ax1). The main body portion 321 is configured such that the thickness t1 of the second object portion Pt2 becomes less at least partially. In the embodiments, the second object portion Pt2 continuously varies the distance between the outer face S1 and the inner face S2, i.e., the thickness t1, by setting the outer face S1 as a curved surface.

The flexible external gear 3 comprises the first object portion Pt1 and the second object portion Pt2 with the thickness t1 varying, thereby enabling a desired shape change (elastic deformation) of the flexible external gear 3 in high dimensions. As a result, the wave generator 4 flexes the flexible external gear 3 and easily generates a harmonic motion of the outer teeth 31 of the flexible external gear 3, thereby enabling the realization of a high-efficiency harmonic gear device 1.

As a comparative example of such flexible external gear 3, in the first object portion Pt1 (or the second object portion Pt2), a section (contour) defining the outer face S1 (curved surface) contains a first concave arc of the first radius R1 and a second concave arc of the second radius R2 (> R1) continuous with the first concave arc. In this case, the structure formed by combining two arcs of different radii is also called a "two-segment arc".

However, in the comparative example, due to the repeated elastic deformation of the flexible external gear 3, especially when it is used for a long period of time, a stress concentration may occur at a boundary portion of the first concave arc and the second concave arc of different radii on the surface of the flexible external gear 3. As a result, damage (cracking or rupture, etc.) starting from the surface of the flexible external gear 3 may occur, thereby affecting the reliability of the harmonic gear device 1.

As an example, when the deformation following of the flexible external gear 3 is hindered due to damage (cracking or splitting, etc.) starting from the surface of the flexible external gear 3, additional energy is required to rotate the wave generator 4, which results in a reduction in the efficiency of the power transmission or a shortening of the life span caused by an increase in the load borne by the bearing 42, etc. That is, such damage causes deterioration of the quality and characteristics or the like of the harmonic gear device 1, and thus causes a decrease in the reliability of the harmonic gear device 1. Furthermore, in order to keep the rate of change of the radius small to avoid stress concentration, it is necessary to provide more arcs of different radii on the section (contour) of the outer face S1, which makes it difficult to manage the shape of the flexible external gear 3.

By adopting the structure described below, the flexible external gear 3 of the present embodiments may realize a harmonic gear device 1 that is not less reliable than the comparative example in which such a "two-section arc" is adopted, and it is not necessary to provide more arcs of different radii on the section (contour) of the outer face S1 as in the comparative example. In this way, it is not difficult to manage the shape of the flexible gear 3 of the present embodiments.

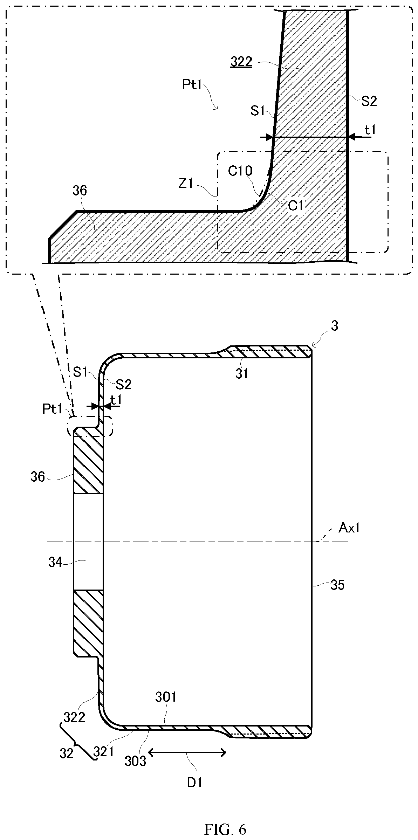

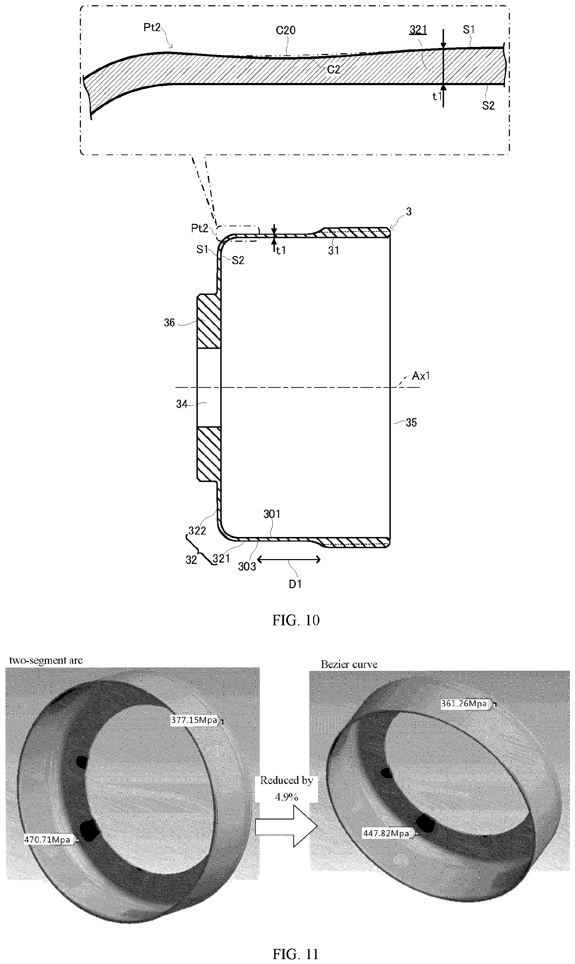

That is, the harmonic gear device 1 of the present embodiments comprises the rigid internal gear 2 in the form of an annulus having the inner teeth 21, the flexible external gear 3 in the form of an annulus having the outer teeth 31, and the wave generator 4. The flexible external gear 3 is disposed on an inner side of the rigid internal gear 2. The wave generator 4 is arranged on an inner side of the flexible external gear 3 to cause the flexible external gear 3 to flex. The wave generator 4 comprises the non-circularly shaped cam 41 which is rotatably driven centered on the rotation axis Ax1, and the bearing 42 arranged on an outer side of the cam 41. The harmonic gear device 1 flexes the flexible external gear 3 along with the rotation of the cam 41, such that some of the outer teeth 31 meshes with some of the inner teeth 21, and causes the flexible external gear 3 to rotate relative to the rigid internal gear 2 according to the difference in the teeth number of the flexible external gear 3 and the rigid internal gear 2. In the flexible external gear 3 of the harmonic gear device 1 of the present embodiments, at least one of the first object portion Pt1 and the second object portion Pt2 in which the thickness t1 of the flexible external gear 3 is varied comprises an object curve C1, C2 (with reference to FIGS. 6 and 10), and the radius of curvature of the object curve C1, C2 excludes discontinuous points. The object curve C1, C2 is configured to make a change in the thickness t1 on the section along the rotation axis Ax1.

In this form, in at least one of the first object portion Pt1 and the second object portion Pt2 in which the thickness t1 of the flexible external gear 3 is varied, the object curve C1, C2 contributing to the change in the thickness t1 comprises a smooth curve that does not have points of inflection in which the radius of curvature changes. Therefore, in the flexible external gear 3, the stress concentration is difficult to be generated in at least one of the first object portion Pt1 and the second object portion Pt2 compared to a structure in which a stress concentration may be generated in a boundary portion of the first concave arc and the second concave arc of different radii, as in the comparative example described above. As a result, it is difficult to cause damage (cracking or rupture, etc.) starting from the surface of the flexible external gear 3 for the harmonic gear device 1, with a higher reliability. Moreover, the harmonic gear device 1 is not likely to reduce the reliability even after long-term use, and therefore contributes to the improvement of the transmission efficiency, the extension of the service life, and the improvement of the performance of the harmonic gear device 1. Moreover, it is also not necessary to provide more arcs of different radii on the section (contour) of the outer face S1 as in the comparative example, and thus it is less difficult to manage the shape in the flexible external gear 3 of the present embodiments.

In the embodiments, as an example, in both the first object portion Pt1 and the second object portion Pt2, the object curves C1, C2 have radii of curvature that do not comprise discontinuous points. In the following, the details of the object curves C1, C2 are illustrated with an example of the object curve C1 of the first object portion Pt1, but as long as they are not otherwise specified, the object curve C2 of the second object portion Pt2 has the same structure.

As shown in FIG. 6, a profile line (the contour line of the outer face S1) on the section of the first object portion Pt1 along the rotation axis Ax1, that is, the object curve C1, contributes to the change in the thickness t1. The object curve C1 defines a three-dimensional shape of the curved surface as the outer face S1 in the first object portion Pt1. The object curve C1 is a curved line protruding toward the rotation axis Ax1 such that the thickness t1 gradually increases toward the tab 36. In FIG. 6, a generalized enlarged view of the first object portion Pt1 is indicated in a lead-in box.

In the embodiments, the radius of curvature of the object curve C1 varies continuously over the entire length of the object curve C1. As a result, the object curve C1 has a radius of curvature that does not contain discontinuous points over its entire length. In other words, the object curve C1 does not have a constant radius of curvature over its entire length, but the radius of curvature is different at each part, and does not have a point of inflection (point of discontinuity, discontinuous point) where the radius of curvature changes, i.e., the radius of curvature varies smoothly over its entire length. Therefore, it has the advantage that it is not easy to generate stress concentration at the boundary of the curvature radius.

The object curve C1 may be represented by a function. That is, instead of defining the object curve C1 by means of multiple circular arcs having different radii as in the described comparative example, the object curve C1 is defined by means of a certain function. As a result, it is also not necessary to provide more arcs of different radii on the section (contour) of the outer face S1 as in the comparative example, and thus it is less difficult to manage the shape in the flexible external gear 3 of the present embodiments.

In the embodiments, as an example, a "function" of the object curve C1 is defined as a Bezier curve. That is, the object curve C1 is represented by a Bezier curve. The "Bezier curve" referred to in the present disclosure is an N-1 quadratic curve obtained from N control points. For example, a smooth curve is drawn on a computer using a Quadratic Bezier curve or a Cubic Bezier curve, etc. In the embodiments, by designing the object curve C1 utilizing such Bezier curves, it is possible to determine the parameters of the object curve C1 defining the three-dimensional shape of the curved surface as the outer face S1 with relative simplicity.

The object curve C1 defined by the Bezier curve as such, as shown in FIG. 6, has a smooth curve with a radius of curvature having no discontinuous points, as compared to the object curve C10 of the comparative example comprising two circular arc segments.

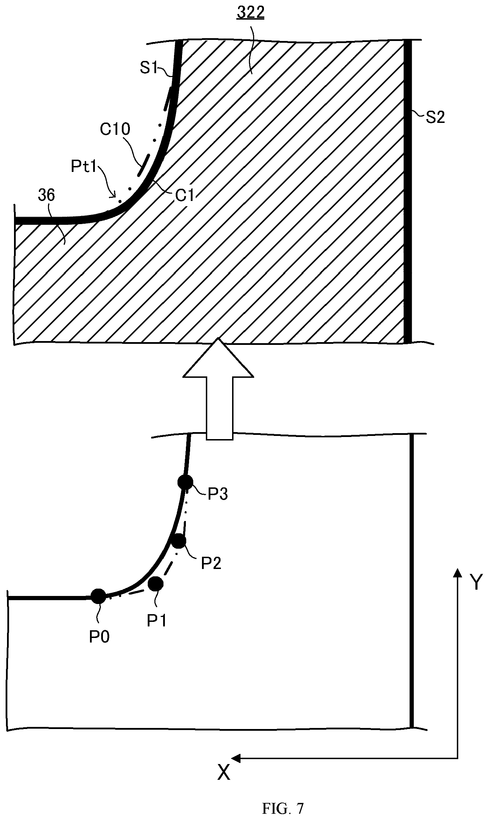

FIG. 7 is an illustrative diagram conceptually representing the object curve C1 defined using the Bezier curve. As shown in the lower portion of FIG. 7, the object curve C1 is defined by a pair of endpoints P0, P3, as the ends of the object curve C1, and a pair of control points P1, P2. That is, the object curve C1 comprising a Bezier curve is expressed using a variable t (t E [0, 1]) varying in a range from "0" to "1" by the following equation of the number formula 1.

[Number formula 1]

$$B(t) = (1-t)^3 P0 + 3t(1-t)^2 P1 + 3t^2(1-t)P2 + t^3 P3$$

As shown in the lower portion of FIG. 7, the horizontal axis (the axis parallel to the rotation axis Ax1) is set as the X-axis, and the vertical axis (the axis perpendicular to the rotation axis Ax1) is set as the Y-axis. In a case where the coordinate position (X, Y) of each of the coordinates (X, Y) of P0, P1, P2, and P3 is defined as (X0, Y0), (X1, Y1), (X2, Y2), and (X3, Y3), the coordinate position of the points plotting the object curve C1 (X, Y) is expressed by the following equations of number formula 2 and number formula 3.

[Number formula 2]

$$X = (1-t)^3 X0 + 3t(1-t)^2 X1 + 3t^2(1-t)X2 + t^3 X3$$

[Number formula 3]

$$Y = (1-t)^3 Y0 + 3t(1-t)^2 Y1 + 3t^2(1-t)Y2 + t^3 Y3$$

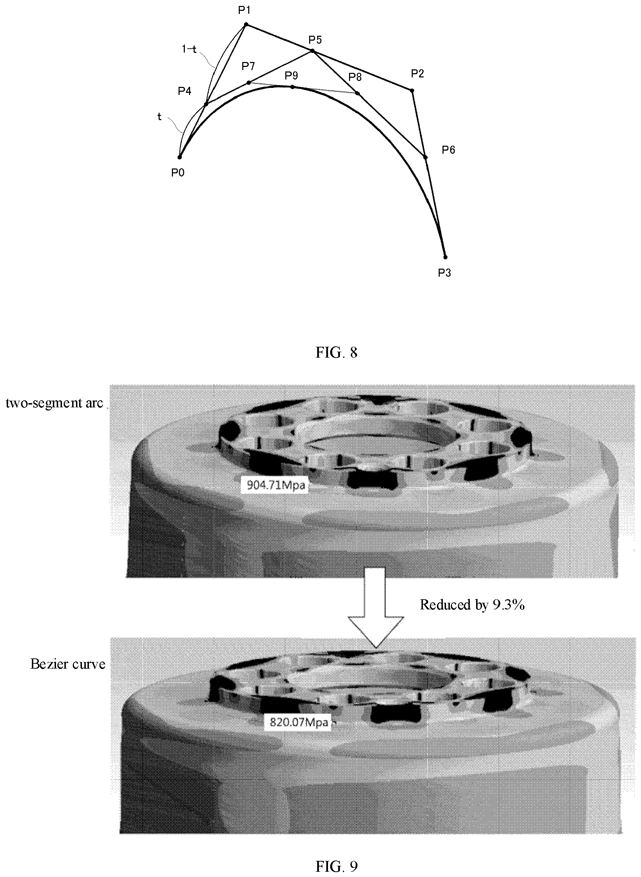

FIG. 8 is an illustrative diagram representing a drawing process of a cubic Bezier curve defined by a pair of endpoints P0, P3 and a pair of control points P1, P2. That is, in order to find the coordinates of the point at which the ratio of t (0 < t < 1) is located based on the endpoint P0 of the Bezier curve, it is possible to do the following calculation.

First, find the points P4, P5, and P6, that is on three line-segments P0-P1, P1-P2, and P2-P3 formed by connecting corresponding control points and divides them in the ratio of "t:1-t", respectively. Next, find the points P7 and P8, that is on line-segments P4-P5 and P5-P6 formed by connecting the points P4, P5, and P6 and divides them in the ratio of "t:1-t", respectively. Finally, find the point P9 that is on the line segment P7-P8 formed by connecting the points P7 and P8 and divides the line-segment in the ratio of "t:1-t", and the point P9 will be the point on the Bezier curve. This operation is repeated in the range of 0 < t < 1, and a three-time Bezier curve in which P0, P1, P2, and P3 are set as control points is obtained.

FIG. 9 represents a comparison between a comparative example having an object curve C10 with two arc segments and the flexible external gear 3 of the present embodiments having an object curve C1 with a Bezier curve, and shows the results of simulating the stress applied to the respective first object portion Pt1. In the flexible external gear 3 of the present embodiments, the stress at the stress concentration area in the first object portion Pt1 is reduced by 9.3% from 904 MPa to 820 MPa as compared with the comparative example.

Thus, in the flexible external gear 3 of the present embodiments, the shape of the object curve C1 in the first object portion Pt1 is carefully designed such that it is not easy to generate a stress concentration at the first object portion Pt1. As a result, it is difficult to generate damage (cracks or ruptures, etc.) starting from the surface of the flexible external gear 3, and thus it is possible to realize the harmonic gear device 1 whose reliability is not easily reduced.

Furthermore, as shown in FIG. 10, a profile line (contour line of the outer face S1) on the section of the second object portion Pt2 along the rotation axis Ax1, i.e., the object curve C2, contributes to the change of the thickness t1. The object curve C2 defines a three-dimensional shape of the curved surface as the outer face S1 in the second object portion Pt2. The object curve C2 is a curved line protruding toward the rotation axis Ax1 such that the thickness t1 gradually decreases in a direction parallel to the rotation axis Ax1 toward the center of the second object portion Pt2. In FIG. 10, a generalized enlarged view of the second object portion Pt2 is indicated in a lead-in box.

In the embodiments, similar to the object curve C1, the radius of curvature varies continuously over the entire length of the object curve C2. Moreover, the object curve C2 is represented utilizing a Bezier curve. The object curve C2 defined by a Bezier curve, as shown in FIG. 10, is a smooth curve with a radius of curvature having no discontinuous points compared to the object curve C20 of the comparative example comprising two circular arc segments.

FIG. 11 represents a comparison between a comparative example having an object curve C10 with two arc segments and the flexible external gear 3 of the present embodiments having an object curve C2 with a Bezier curve, and shows the results of simulating the stress applied to the respective second object portion Pt2. In the flexible external gear 3 of the present embodiments, the stress at the stress concentration portion in the second object portion Pt2 is reduced by 4.9% from 470 MPa to 447 MPa as compared with the comparative example.

Thus, in the flexible external gear 3 of present embodiments, the shape of the object curve C2 in the second object portion Pt2 is carefully designed such that it is not easy to generate a stress concentration at the second object portion Pt2. As a result, it is difficult to generate damage (cracks or breakage, etc.) starting from the surface of the flexible external gear 3, and thus it is possible to realize a harmonic gear device 1 whose reliability is not easily reduced.

## (5) Applicable Example

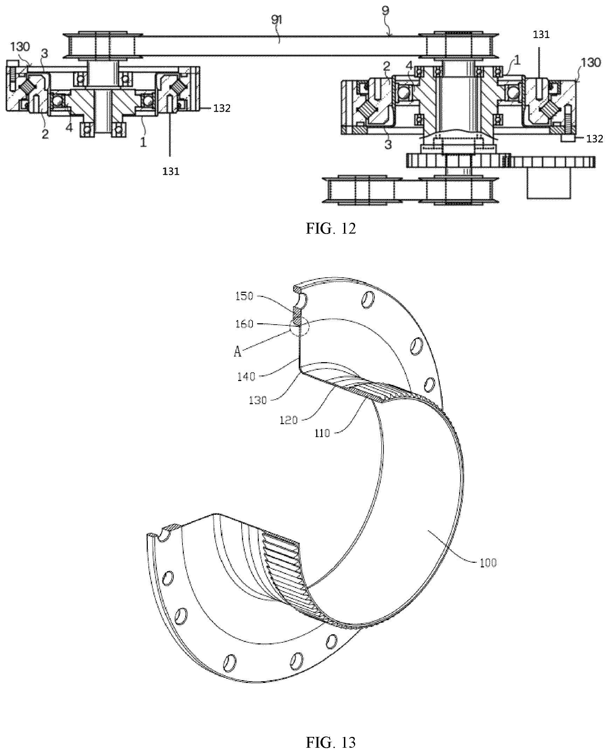

Applicable examples of the harmonic gear device 1, the actuator 100, and the joint device 130 for a robot, as proposed in the present embodiments, are described with reference to FIG. 12.

FIG. 12 is a cross-sectional view of a robot 9 comprising the harmonic gear device 1. The robot 9 is a horizontal multi-joint robot (Selective Compliance Assembly Robot Arm, SCARA).

As shown in FIG. 12, the robot 9 comprises two joint devices 130 (each comprising the harmonic gear device 1) and a connecting rod 91. The two joint devices 130 are located at two joints in the robot 9. The connecting rod 91 connects the two joint devices 130. In the example of FIG. 12, the harmonic gear device 1 is of a bowler hat type rather than a cup type. That is, in the harmonic gear device 1 exemplified in FIG. 12, a flexible external gear 3 formed in the shape of a bowler hat is applied.

## (6) Variant Example

The Implementation 1 is but one of various embodiments of the present disclosure. As long as Implementation 1 can fulfill the purpose of the present disclosure, various changes can be made according to the design or the like. Furthermore, the accompanying drawings referred to in the present disclosure are schematic drawings, and the ratio of the size and thickness of each component in the drawings does not necessarily reflect the actual size ratio. Hereinafter, variations of Implementation 1 are listed. The variations described hereinafter may be used in appropriate combinations.

In Implementation 1, the object curve C1, C2 has a radius of curvature that does not comprise any discontinuous point in each of the first object portion Pt1 and the second object portion Pt2, but it is sufficient that the object curve C1, C2 has a radius of curvature that does not comprise a discontinuous point in at least one of the first object portion Pt1 and the second object portion Pt2. That is, in the first object portion Pt1 and the second object portion Pt2, it is possible that only the object curve C1 has a radius of curvature that does not comprise the discontinuous point in the first object portion Pt1, or only the object curve C2 has a radius of curvature that does not comprise the discontinuous point in the second object portion Pt2.

Moreover, the radius of curvature of the object curve C1, C2 is not required to vary continuously over the entire length of the object curve C1, C2. For example, the radius of curvature of the object curve C1, C2 may be the same over the entire length of the object curve C1, C2. In this case, the object curve C1, C2 does not have a radius of curvature that varies according to different parts, as is the case with Bezier curves, but has a uniform radius of curvature. Even with this structure, the flexible external gear 3 is less likely to generate a stress concentration in at least one of the first object portion Pt1 and the second object portion Pt2 than a structure in which a stress concentration may be generated in the boundary portion of the first concave arc and the second concave arc of differing radii as in the described comparative example.

Furthermore, the tooth shape trimming of the inner teeth 21 and the outer teeth 31 is not a necessary structure of the harmonic gear device 1. For example, at least one of the inner teeth 21 and the outer teeth 31 may not be tooth shape trimmed.

Furthermore, it is not necessary for the harmonic gear device 1 to have the rotating bodies 423 supported at four points in the bearings 42, but for example, it is possible to have the rotating bodies 423 supported at two points.

Furthermore, the harmonic gear device 1 is not limited to the cup type illustrated in Implementation 1, but may be, for example, a bowler hat type, a ring type, a differential type, a flat type (pancake type), or a shield type. For example, even the bowler hat-type harmonic gear device 1 illustrated in FIG. 12 has a cylindrically shaped flexible external gear 3 having an opening surface 35 on a side in the tooth line direction D1, in the same manner as the cup type. That is, an end portion of the bowler hat-type flexible external gear 3 comprises a flange portion on a side of the rotation axis Ax1, and an end portion on the side opposite to the flange portion comprises an opening surface 35. The end portion on the side with the opening surface 35 comprises outer teeth 31 and the wave generator 4 is embedded therein.

Furthermore, the structure of the actuator 100 is not limited to the structure described in Implementation 1, and appropriate changes may be made. For example, the link structure between the input portion 103 and the cam 41 is not limited to a spline link structure, and an Oldham coupling or the like may be applied. By using an Oldham coupling as the link structure between the input portion 103 and the cam 41, a misalignment between the rotation axis Ax1 on the input side and the wave generator 4 (cam 41) may be counteracted, and thus the misalignment between the rigid internal gear 2 and the flexible external gear 3 may be counteracted. Further, the cam 41 is not necessarily to be movable along the rotation axis Ax1 relative to the input portion 103.

Furthermore, the applicable examples of the harmonic gear device 1, the actuator 100, and the joint device 130 for a robot of the present embodiments are not limited to a horizontal multi-joint robot as described above, but may be, for example, an industrial robot other than a horizontal multi-joint robot or a robot other than an industrial robot, etc. As an example, the industrial robot other than a horizontal multi-joint robot may be a vertical multi-joint robot or parallel link robot, etc. As an example, the robot other than an industrial robot may be a household robot, nursing care robot, medical robot, etc.

Furthermore, the bearing 42 is not limited to a deep groove ball bearing, but may be, for example, an angular contact ball bearing or the like. Further, the bearing 42 is not limited to a ball bearing, but may be, for example, a roller bearing, a needle roller bearing, a tapered roller bearing, or the like, in which the rotating body 423 is formed by a roller that is not spherical. Even if the rotating body 423 has a shape other than a ball shape (spherical), a pressure difference is generated by rotation of the rotating body 423, and the rotating body 423 functions as a pump structure.

Furthermore, the material of each constituent element of the harmonic gear device 1, the actuator 100, or the joint device 130 for a robot is not limited to metal, but may be a resin such as an engineering plastic.

Furthermore, the lubricant Lb1 is not limited to a liquid substance such as lubricant oil, but may be a gel-like substance such as grease.

(Summary)

As described above, the flexible external gear 3 in a first form is the flexible external gear 3 of the harmonic gear device 1, and the harmonic gear device 1 is arranged with the rigid internal gear 2, the flexible external gear 3, and the wave generator 4. The rigid internal gear 2 is an annular element having inner teeth 21. The flexible external gear 3 is an annular element having outer teeth 31 and arranged on an inner side of the rigid internal gear 2. The wave generator 4 comprises a non-circularly shaped cam 41 which is rotatably driven centered on the rotation axis Ax1, and a bearing 42 arranged on an outer side of the cam 41. The wave generator 4 is arranged on an inner side of the flexible external gear 3 so as to cause the flexible external gear 3 to flex. The harmonic gear device 1 flexes the flexible external gear 3 along with the rotation of the cam 41 such that some of the outer teeth 31 meshes with some of the inner teeth 21, and rotates the flexible external gear 3 relative to the rigid internal gear 2 according to the difference in the teeth number of the flexible external gear 3 and the rigid internal gear 2. In at least one of the first object portion Pt1 and the second object portion Pt2 in which the thickness t1 of the flexible external gear 3 varies, the object curve (C1, C2) contributing to the variation of the thickness t1 on the profile along the rotation axis Ax1 has a radius of curvature that does not comprise a discontinuous point.

In this form, in at least one of the first object portion Pt1 and the second object portion Pt2 in the flexible external gear 3 in which the thickness t1 changes, the object curve (C1, C2) contributing to the change in the thickness t1 is a smooth curve that does not have points of inflection in which the radius of curvature changes. As a result, in the flexible external gear 3, at least one of the first object portion Pt1 and the second object portion Pt2 is less likely to generate a stress concentration than a structure in which a stress concentration may be generated at a boundary portion of the first concave arc and the second concave arc having different radii. In this way, it is difficult to generate damage (cracks or ruptures, etc.) starting from the surface of the flexible external gear 3, and thus it is possible to realize the harmonic gear device 1 whose reliability is not easily reduced.

In a second form of the flexible external gear 3, the radius of curvature of the object curve (C1, C2) varies continuously over the entire length of the object curve (C1, C2) based on the first form.

In this form, the radius of curvature of the object curve (C1, C2) is not constant over the entire length thereof, but rather the radius of curvature is different at each part, and does not have a point of inflection (point of discontinuity, discontinuous point) where the radius of curvature changes, i.e., the radius of curvature changes smoothly over its entire length. Therefore, it has the advantage that it is not easy to generate stress concentration at the boundary of the curvature radius.

In a third form of the flexible external gear 3, the object curve (C1, C2) is represented by a function based on the second form.

In this form, it is not necessary to set up more arcs with different radii in the section (contour), and therefore it is less difficult to manage the shape of the flexible external gear 3.

In a fourth form of the flexible external gear 3, the object curve (C1, C2) is represented by a Bezier curve based on the third form.

In this form, it is possible to determine the parameters of the object curve (C1, C2) relatively simply.

In a fifth form of the flexible external gear 3, the radius of curvature of the object curve (C1, C2) is the same over the entire length of the object curve (C1, C2) based on the first form.

In this form, it is possible to determine the parameters of the object curve (C1, C2) relatively simply.

In a sixth form, a harmonic gear device 1 comprises the flexible external gear 3 of any of the first to fifth forms, a rigid internal gear 2, and a wave generator 4.

In this form, it is difficult to cause damage (cracks or breakage, etc.) starting from the surface of the flexible external gear 3, and thus, the harmonic gear device 1 with low reliability can be realized.

In a seventh form, a joint device 130 for a robot comprises the harmonic gear device 1 in the 6th form, a first member 131 fixed to the rigid internal gear 2, and a second member 132 fixed to the flexible external gear 3.

In this form, it is difficult to produce damage (cracks or breakage, etc.) starting from the surface of the flexible external gear 3, and thus it is possible to provide the joint device 130 for a robot whose reliability is not likely to be reduced.

The structures in the second to fifth forms that are not necessary for the flexible external gear 3 may be appropriately omitted.

According to the above, the flexible external gear 3 may be of a bowler hat type, a ring type, a differential type, a flat type (pancake type), or a shield type, etc., and the implementation details and further other optional settings thereof, as well as apparatuses comprising the flexible external gear (flex wheel), will be further elaborated below.

The harmonic gear reducer is a reducer comprising a stationary circular spline, a flex spline, and a wave generator which causes a radial deformation of the flex spline; the flex spline is arranged on an outside of the wave generator and the circular spline being is arranged on an outside of the flex spline; the flex spline is driven by the wave generator to generate a radial deformation and rotate, such that the flex spline generates a controllable elastic deformation wave, which causes a relative mismatch between teeth of the circular spline and the flex spline for transmitting power and motion. Due to the inherent characteristics of the harmonic reducer, the area where the flex spline meshes with the circular spline is large, which makes its bearing capacity relatively high, and thus the harmonic reducer is widely applied in the fields of electronics, aerospace and aviation, and industrial robotics, etc.

The application scenarios of the harmonic reducer tend to small equipment. Currently, the harmonic reducer is developed toward high speed, high rigidity, long life and other aspects, and at the same time, the flex spline and flexible bearing is also more demanding. In order to facilitate manufacturing, an inner wall of an existing flex spline is flat, such that the wall thickness of the flex spline is uniform. When the harmonic reducer is in operation, the flex spline is required to withstand the alternating stress imposed by the wave generator and the meshing torque imposed by the circular spline. However, the torque of the high load will make the flex spline deformed, and thus the flex spline with uniform wall thickness has a poor toughness, which is likely to lead to the failure and rupture of the flex spline easily because of the repeated deformation. Especially in a transition region at the connection between the flange and the diaphragm, where the stress is concentrated, and it is prone to failure such as tearing and other problems, which reduces the service life and reliability of the harmonic reducer. Currently, the contour line of the transition region is usually designed to comprise two arcs, and the continuity transition at the connection of the two arcs is difficult to process. In this way, this unreasonable design may cause a large stress concentration, resulting in a short service life of the flex spline and affecting the stability of the harmonic reducer.

In order to solve the above technical problems, the present disclosure further proposes a flex spline applied to a harmonic reducer and a design method of the flex spline, which may improve the ability of the flex spline to withstand deformation, reduce the stress concentration, prolong the service life of the flex spline, and thus enhance the reliability of the harmonic reducer.

The following description is made in conjunction with the accompanying drawings:

Referring to FIGS. 13 to 15, in a first aspect, the present disclosure proposes a flex spline, to be applied to a harmonic reducer, where a main body of the flex spline is a cylinder 100'. As shown in FIG. 4, an end of the cylinder 100' has an opening, and an outer wall of the end is arranged with a tooth portion 110 to enable the cylinder 100' to be fitted to a wave generator 300 of the harmonic reducer; a flange portion 150 is arranged on the other end of the cylinder 100', and the flange portion 150 serves as an output end of the harmonic reducer to be connected to another device, for transferring motion and torque to the device.

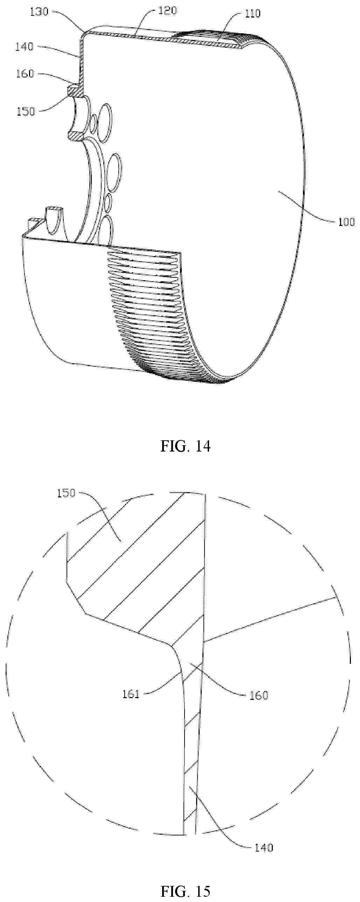

Along an axial direction of the cylinder 100', the cylinder 100' comprises the tooth portion 110, a barrel portion 120, a bending portion 130, a diaphragm portion 140, and the flange portion 150; the tooth portion 110 is a portion of the cylinder 100' arranged with outer teeth; an end of the barrel portion 120 is connected to the tooth portion 110, and the other end of the barrel portion 120 is connected to the bending portion 130; the bending portion 130 is bent to a radial direction of the cylinder 100' from the axial direction of the cylinder 100'; the diaphragm portion 140 is a radial structure connected to the bending portion 130; the flange portion 150 is configured to be connected to a load, distributed substantially along the radial direction of the cylinder 100'. It will be appreciated that the flange portion 150 may be radially outwardly extending along the cylinder 100', as shown in FIG. 13; or the flange portion 150 may be radially inwardly extending along the cylinder 100', as shown in FIG. 14. The flange portion 150 defines multiple mounting holes along a peripheral direction, to cooperate in connection with another device, and thus the thickness of the flange portion 150 is usually large (along the axial direction of the cylinder 100'). The connection between the flange portion 150 and the diaphragm portion 140 is a transition region 160. Due to the large difference in thickness between the flange portion 150 and the diaphragm portion 140, a stress concentration is likely to be formed in the transition region 160, which may lead to a tearing of the flex spline during the operation of the harmonic reducer, and thus the stability of the harmonic reducer may be affected.

Therefore, a contour line of the transition region 160 is designed as a spline curve 161, and in an axial section of the cylinder 100', the spline curve 161 is a contour line of a side wall of the transition region 160 departing from the tooth portion 110, where the side walls of the flange portion 150 and the diaphragm portion 140 toward the tooth portion 110 are usually flush. The spline curve 161 serves as a transition between the flange portion 150 and the diaphragm portion 140, and the spline curve 161 extends both axially and radially along the cylinder 100'. The use of the spline curve 161 as the contour line for the side wall of the transition region 160 helps to form a smooth curved surface that reduces the stress concentration and reduces the risk of tearing failure of the flex wheel.

It will be appreciated that the spline curve is a smooth curve that passes through a given series of points. Initially, the spline curve is obtained with the help of a physical spline, where a sampler fixes a flexible thin wood (or plexiglass strip) with a pressurized iron to given type value points that a curve should pass through, and the spline performs a natural curvature to draw a curve, which is the spline curve. The spline curve not only passes through each of the ordered type value points, but also has continuous first and second order derivatives at each of the type value points, i.e., the curve is characterized by continuity and uniform curvature change. Therefore, the contour line of the side wall of the transition region 160 is designed as the spline curve 161 to form a smooth transition surface, and the spline curve 161 replaces the contour line of two circular arcs, eliminating the continuity problem at the connection of the two circular arcs, which is conducive to simplifying the design of the flex spline and improving the durability of the flex spline.

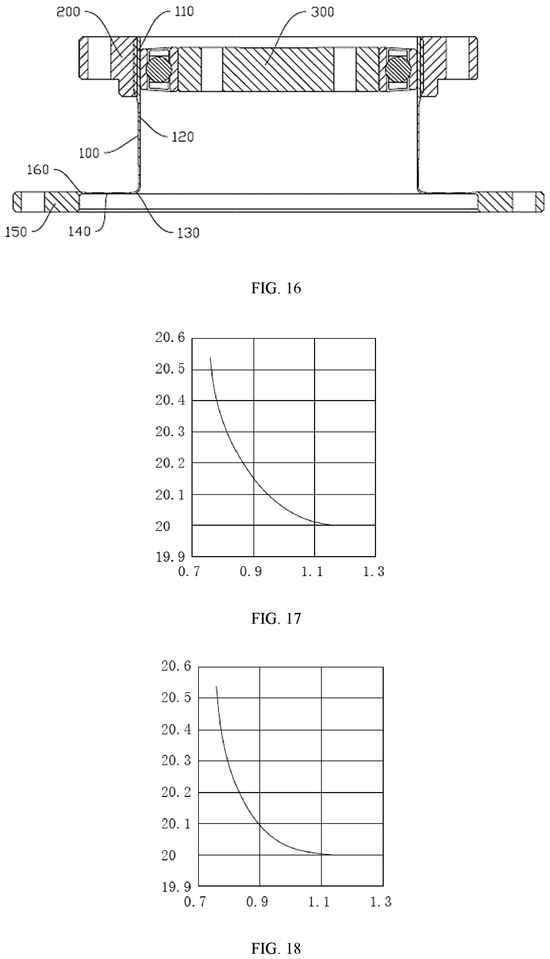

Referring to FIG. 16, the cylinder 100' of the flex spline has the opening at one end to connect to the wave generator 300, and the other end of the cylinder 100' has the flange portion 150, such that the load can be connected to the flex spline through the flange portion 150. The load is driven through the flex spline to move, and the motion and torque are transmitted by the flex spline. The flex spline has to repeatedly withstand the deformation and torsion during operation of the harmonic reducer. By designing the contour line of the side wall of the transition region 160 as the spline curve 161, the connection between the diaphragm portion 140 and the flange portion 150 is made to have a smooth transition, thereby reducing the stress concentration, improving the ability to withstand the deformation of the flex spline, reducing the risk of the flex spline failing and fracture due to deformation, and improving the fatigue strength of the flex spline. The connection between the diaphragm portion 140 and the flange portion 150 is capable of withstanding a greater amount of stress and torsion, which is conducive to prolonging the service life of the flex spline, thereby enhancing the reliability of the harmonic reducer.

It is to be noted that, referring to FIG. 16, the wave generator 300 is arranged at the opening of the cylinder 100', and a circular spline 200 is sleeved on an outer side of the cylinder 100'; the circular spline 200 and the flex spline have wheel teeth of the same modulus but different teeth number, and it is usually that the teeth number of the flex spline is two less than the teeth number of the circular spline 200; the difference in the teeth number of the harmonic transmission characterizes the number of deformation waves of the flex spline; in a free state (without the wave generator 300), the circular spline 200 and the flex wheel are in a concentric position, and a gap between each tooth of the circular spline 200 and a corresponding tooth of the flex wheel is uniform. The wave generator 300 is typically elliptical; the wave generator 300 undergoes a radial deformation to become elliptical, which, on the long axis of the ellipse, causes the circular spline 200 to mesh with a part of the tooth portion 110 of the flex spline, and on the short axis, a radial gap is defined. The wave generator 300 drives the flex spline to rotate, and during the rotation of the generator, the shape of the flex spline is always close to the shape described above. Since the circular spline 200 generates a differential tooth engagement moment when it meshes with the flex spline, a bending deformation of the flex spline is generated. Since the flange portion 150 is connected to the load and as the output end, the stress at the connection between the flange portion 150 and the diaphragm portion 140 is relatively large, which is prone to fatigue or even failure due to tearing. Therefore, by designing the shape of the flex spline, the contour line of the side wall of the transition region 160 is designed as the spline curve 161 to form a smooth transition surface, and the spline curve 161 replaces the contour line of the two circular arcs, thereby eliminating the continuity problem at the connection of the two circular arcs, which is conducive to simplifying the design of the flex wheel and improving the durability of the flex wheel.

In some embodiments, the spline curve 161 is adopted with a third-order equation. The coordinates of two endpoints Po, $P_3$ of the spline curve 161 are (Xo, $Y_0$), ($X_3$, Y3), and the spline curve 161 has a first control point $P_1$ and a second control point $P_2$, where the coordinates of the first control point $P_1$ are ($X_1$, $Y_1$), the coordinates of the second control point $P_2$ are ($X_2$, $Y_2$). The coordinates (X, Y) of any point on the spline curve 161 satisfy:

$$X = (1-t)^3 X_0 + 3t(1-t)^2 X_1 + 3t^2(1-t)X_2 + t^3 X_3$$

$$Y = (1-t)^3 Y_0 + 3t(1-t)^2 Y_1 + 3t^2(1-t)Y_2 + t^3 Y_3$$

where $t \in [0,1]$ and t takes values from 0 to 1 corresponding to one endpoint Po to another endpoint $P_3$ of the spline curve 161, Po and $P_3$ are calculated according to the shapes of the diaphragm portion 140 and the flange portion 150 of the flex wheel, and then the coordinates of the two control points $P_1$ and $P_2$ are set to get the third-order equation of the spline curve 161.

It should be understood that the first control point $P_1$ and the second control point $P_2$ are configured to control the shape of the spline curve 161, and the first control point $P_1$ and the second control point $P_2$ are not necessarily points on the spline curve 161.

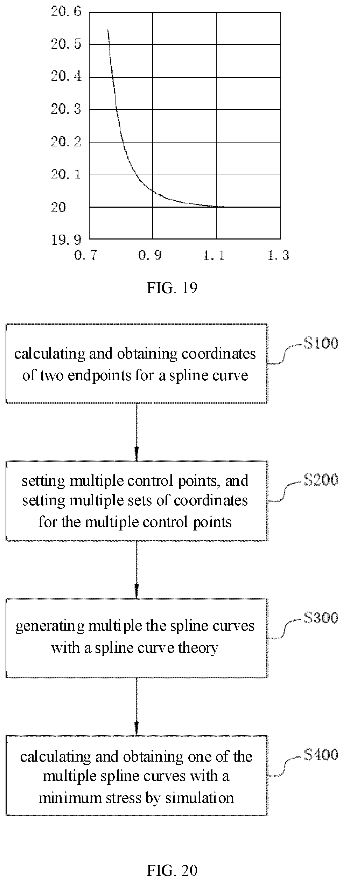

Referring to FIG. 17, the coordinates of the two endpoints of the spline curve 161 are Po (1.131, 20) and $P_3$ (0.761, 20.547), and the coordinates of the two control points are $P_1$ (1.1, 20) and $P_2$ (0.8, 20.136), and the shape of the spline curve 161 is as shown in FIG. 17. Referring to FIG. 18, the coordinates of the two endpoints of the spline curve 161 are Po (1.131, 20) and $P_3$ (0.761, 20.547), the coordinates of the two control points are $P_1$ (0.9, 20) and $P_2$ (0.8, 2 0.136), and the shape of the spline curve 161 is shown in FIG. 18. Referring to FIG. 19, the coordinates of the two endpoints of the spline curve 161 are Po (1.131, 20) and $P_3$ (0.761, 20.547), and the coordinates of the two control points are $P_1$ (0.8, 20.05) and $P_2$ (0.8, 20.547), and the shape of the spline curve 161 is shown in FIG. 19. By setting the coordinates of the two control points $P_1$ and $P_2$, it is possible to control the shape of the spline curve 161, and then a mechanical simulation is carried out by means of a finite element software in order to calculate the spline curve 161 with the smallest stress. Upon calculation, by adopting the spline curve 161 shown in FIG. 19, the value of the maximum stress is reduced by about 9.3%, indicating that it is effective in reducing the stress concentration of the flex spline.

It is understood that the coordinates of the first control point $P_1$ and the second control point $P_2$ are limited to $X_1 = t_1 X_0 + (1 - t_1)X_3$ , , $Y_1 = t_2 Y_0 + (1 - t_2)Y_3$ , $X_2 = t_3 X_0 + (1 - t_3)X_3$, $Y_2 = t_4 Y_0 + (1 - t_4)Y_3$, where $t_1$ ranges from 0.05 to 0.16, $t_2$ ranges from 0.85 to 0.96, $t_3$ ranges from 0.06 to 0.15, and $t_4$ ranges from 0.68 to 0.82.

In some embodiments, $t_1$ takes on values in the range of 0.09 to 0.12, $t_2$ takes on values in the range of 0.92 to 0.96, $t_3$ takes on values in the range of 0.08 to 0.13, and $t_4$ takes on values in the range of 0.72 to 0.79, providing a better technical result with lower stresses in the transition region 160.

It is to be understood that in the spline curve 161, the slope of Po is Bo, and Bo is bounded by the coordinates of Po and $P_1$, and similarly, the slope of $P_1$ is $B_1$, the slope of $P_2$ is $B_2$, and the slope of $P_3$ is $B_3$. The slope of any one point on the spline curve 161 is $B_t$, and $B_t$ is likewise computed by using a third-order equation, which is computed as:

$$B_t = (1-t)^3 B_0 + 3t(1-t)^2 B_1 + 3t^2(1-t)B_2 + t^3 B_3$$

where $t \in [0,1]$ and t takes values from 0 to 1 corresponding to one endpoint Po to another endpoint $P_3$ of the spline curve 161.

In some embodiments, the slope of Po is set to 0, and the slope of $P_3$ is set to - tan(84.58°). By setting the slopes of $P_0$ and $P_3$, the shape of the spline curve 161 is controlled such that the spline curve 161 is closer to the contour line of the diaphragm portion 140 and the contour line of the flange portion 150, which is conducive to smooth transitions and reducing stress concentration. It is to be understood that the flex spline may be designed such that the two ends of the spline curve 161 are tangent to the contour lines of the side walls of the diaphragm portion 140 and the flange portion 150, so as to make a smooth transition of the connection position of the transition region 160 with the diaphragm portion 140 and the flange portion 150, which is conducive to reducing the stress concentration and improving the reliability and durability of the flex spline.

Referring to FIGS. 13 and 14, it can be understood that the bending portion 130 is the connection between the barrel portion 120 and the diaphragm portion 140. To realize the change of direction, the bending portion 130 is usually designed as a circular curved surface transition, and thus, the side contour lines of the bending portion 130 are all circular curved lines. The barrel portion 120, the diaphragm portion 140, and the bending portion 130 are connected with each other by smooth curved surfaces, which reduces the stress concentration and contributes to improving the reliability of the flex spline.

In a second aspect, the present disclosure proposes a design method for a flex spline, applied to the flex spline in the first aspect. Referring to FIG. 20, the design method comprises the operations at blocks illustrated herein.

At block S100: calculating and obtaining coordinates of two endpoints for a spline curve 161.

At block S200: setting multiple control points, and setting multiple sets of coordinates for the multiple control points.

At block S300: generating multiple the spline curves 161 with a spline curve theory.

At block S400: calculating and obtaining one of the multiple spline curves 161 with a minimum stress by simulation.

According to the design method in the embodiments of the present disclosure, the flex spline is designed to have a contour line in accordance with the spline curve 161 with the minimum stress, which may effectively reduce the maximum stress in the transition region, thereby reducing the stress concentration of the flex spline, improving the deformation withstanding capacity of the flex spline, reducing the risk of the flex spline failing and rupture due to deformation, and improving the fatigue strength of the flex spline, which is conducive to prolonging the service life of the flex spline, and thus improving the reliability of the harmonic reducer.

It is to be understood that in the step of calculating the spline curve 161 with minimum stress by simulation, a mechanical simulation by means of a finite element software under a same working condition may be adopted to calculate the spline curve 161 with minimum stress.

It is to be understood that in the step of setting multiple control points, the control points may be selected as two, or three, or four or a greater number. Two control points may be selected to control the shape of the spline curve 161 to satisfy the requirements of the simulation for calculating the stresses, and the amount of calculation may be reduced to reduce the manufacturing cost of the flex wheel. The two control points cooperate with the two endpoints are adopted for designing the spline curve 161, such that the connection between the diaphragm portion 140 and the flange portion 150 has a smooth transition, which reduces the stress concentration, improves the ability of the flex spline to withstand the deformation, reduces the risk of the flex spline rupture and failing due to deformation, and improves the fatigue strength of the flex spline. In this way, the connection between the diaphragm portion 140 and the flange portion 150 can withstand a greater amount of stress and torsion, which is beneficial to prolonging the service life of the flex spline, thereby improving the reliability of the harmonic reducer. In addition, the more control points selected, the more accurate the fitting of the spline curve 161 is, and the corresponding calculation is more complicated and time-consuming.

The following is an example of using two control points.

In some embodiments, the spline curve 161 is adopted with a third-order equation, the two endpoints of the spline curve 161 are set as $P_0 (X_0, Y_0)$ and $P_3 (X_3, Y3)$, the two control points are the first control point $P_1 (X_1, Y_1)$ and the second control point $P_2 (X_2, Y_2)$, and the coordinates of any one point $(X, Y)$ on the spline curve 161 satisfy:

$$X = (1-t)^3 X_0 + 3t(1-t)^2 X_1 + 3t^2(1-t)X_2 + t^3 X_3$$

$$Y = (1-t)^3 Y_0 + 3t(1-t)^2 Y_1 + 3t^2(1-t)Y_2 + t^3 Y_3$$

where $t \in [0,1]$ and $t$ takes values from 0 to 1 corresponding to one endpoint $P_0$ to another endpoint $P_3$ of the spline curve 161, $P_0$ and $P_3$ are calculated according to the shapes of the diaphragm portion 140 and the flange portion 150 of the flex wheel, and then the coordinates of the two control points $P_1$ and $P_2$ are set to get the third-order equation of the spline curve 161, and thus the spline curve 161 with the minimum stress is calculated by simulation.

It is understood that the first control point $P_1 (X_1, Y_1)$ and the second control point $P_2 (X_2, Y_2)$ are configured to control the shape of the spline curve 161.

It is to be understood that the coordinates of the first control point $P_1$ and the second control point $P_2$ may be $X_1 = t_1 X_0 + (1 - t_1)X_3$, $Y_1 = t_2 Y_0 + (1 - t_2)Y_3$, $X_2 = t_3 X_0 + (1 - t_3)X_3$, $Y_2 = t_4 Y0 + (1 - t_4)Y_3$, wherein the value of $t_1$ ranges from 0.05 to 0.16, $t_2$ ranges from 0.85 to 0.96, $t_3$ ranges from 0.06 to 0.15, and $t_4$ ranges from 0.68 to 0.82.

In some embodiments, $t_1$ ranges from 0.09 to 0.12, $t_2$ ranges from 0.92 to 0.96, $t_3$ ranges from 0.08 to 0.13, and $t_4$ ranges from 0.72 to 0.79, providing a better technical result with lower stresses in the transition zone 160.

It is to be understood that in the spline curve 161, the slope of $P_0$ is $B_0$, and Bo is bounded by the coordinates of $P_0$ and $P_1$, and similarly, the slope of $P_1$ is $B_1$, the slope of $P_2$ is $B_2$, and the slope of $P_3$ is $B_3$. The slope of any point on the spline curve 161 is $B_t$, and $B_t$ is likewise computed by using a third-order equation, which is computed as:

$$B_t = (1-t)^3 B_0 + 3t(1-t)^2 B_1 + 3t^2(1-t)B_2 + t^3 B_3$$

where $t \in [0,1]$ and t takes values from 0 to 1 corresponding to one endpoint $P_0$ to another endpoint $P_3$ of the spline curve 161.

Referring to FIG. 16, in a third aspect, the present disclosure proposes a harmonic reducer comprising a circular spline 200, a wave generator 300, and a flex spline in the first aspect; where the circular spline 200 is arranged on an outer side of the flex spline, the circular spline is arranged with inner teeth, the tooth portion 110 of the flex spline is arranged with outer teeth, and the flex spline is arranged on an outer side of the wave generator 300; the wave generator 300 abuts against an inner wall of the tooth portion 110. The inner teeth of the circular spline 200 and the outer teeth of the flex spline are wheel teeth with the same modulus but different teeth number, and it is usually that the teeth number of the flex spline is 2 less than the teeth number of the circular spline 200; the difference in the teeth number of the harmonic transmission characterizes the number of deformation waves of the flex spline; in a free state (without the wave generator 300), the circular spline 200 and the flex wheel are in a concentric position, and a gap between each tooth of the circular spline 200 and a corresponding tooth of the flex wheel is uniform. The wave generator 300 is typically elliptical; the wave generator 300 undergoes a radial deformation to become elliptical, which, on the long axis of the ellipse, causes the circular spline 200 to mesh with a part of the tooth portion 110 of the flex spline, and on the short axis, a radial gap is defined. The wave generator 300 drives the flex spline to rotate, and during the rotation of the generator, the shape of the flex spline is always close to the shape described above. Since the circular spline 200 generates a differential tooth engagement moment when it meshes with the flex spline, a bending deformation of the flex spline is generated.

Since the flange portion 150 is connected to the load and as the output end, the stress at the connection between the flange portion 150 and the diaphragm portion 140 is relatively large, which is prone to fatigue or even failure due to tearing. Therefore, by designing the shape of the flex spline, the contour line of the side wall of the transition region 160 is designed as the spline curve 161 to form a smooth transition surface, and the spline curve 161 replaces the contour line of the two circular arcs, thereby eliminating the continuity problem at the connection of the two circular arcs, which is conducive to simplifying the design of the flex wheel and improving the durability of the flex wheel.

As shown in FIG. 16, a main body of the flex spline is a cylinder 100', and along an axial direction of the cylinder 100', the cylinder 100' comprises the tooth portion 110, a barrel portion 120, a bending portion 130, a diaphragm portion 140, and the flange portion 150 sequentially connected;, the tooth portion 110 is a portion of the cylinder 100' arranged with outer teeth; an end of the barrel portion 120 is connected to the tooth portion 110, and the other end of the barrel portion 120 is connected to the bending portion 130; the bending portion 130 is bent to a radial direction of the cylinder 100' from the axial direction of the cylinder 100'; the diaphragm portion 140 is a radial structure connected to the bending portion 130; the flange portion 150 is configured to be connected to a load, distributed substantially along the radial direction of the cylinder 100'. The flange portion 150 defines multiple mounting holes along a peripheral direction, to cooperate in connection with another device, and thus the thickness of the flange portion 150 is usually large (along the axial direction of the cylinder 100'). The connection between the flange portion 150 and the diaphragm portion 140 is a transition region 160. Due to the large difference in thickness between the flange portion 150 and the diaphragm portion 140, a stress concentration is likely to be formed in the transition region 160, which may lead to a tearing of the flex spline during the operation of the harmonic reducer, and thus the stability of the harmonic reducer may be affected.

Therefore, a contour line of the transition region 160 is designed as a spline curve 161, and in an axial section of the cylinder 100', the spline curve 161 is a contour line of a side wall of the transition region 160 departing from the tooth portion 110, where the side walls of the flange portion 150 and the diaphragm portion 140 toward the tooth portion 110 are usually flush. The spline curve 161 serves as a transition between the flange portion 150 and the diaphragm portion 140, and the spline curve 161 extends both axially and radially along the cylinder 100'. The use of the spline curve 161 as the contour line for the side wall of the transition region 160 helps to form a smooth curved surface that reduces the stress concentration and reduces the risk of tearing failure of the flex wheel.

In a fourth aspect, the present disclosure provides an industrial robot comprising the harmonic reducer in the third aspect. The industrial robot may be a handling robot, a welding robot, an assembly robot, a machining robot, a spraying robot, a clean robot, a collaborative robot, etc. By applying the harmonic reducer in the third aspect of the present disclosure to the industrial robot, where the harmonic reducer is adopted with the flex spline in the first aspect, the contour line of the transition region 160 of the flex spline is designed as the spline curve 161, which helps form a smooth transition surface, thereby reducing the stress concentration, reducing the risk of tearing failure of the flex spline, improving the reliability of the harmonic reducer, and facilitating the stable operation of the industrial robot for a long time.

The embodiments of the present disclosure have been described in detail above in conjunction with the accompanying drawings, but the present disclosure is not limited to the above embodiments, and various changes can be made within the scope of the knowledge possessed by those skilled in the art without departing from the purpose of the present disclosure.

**Claims**

1. A flex spline (3), **characterized by** comprising:

   a body portion (32), comprising a main body portion (321) and a bottom portion (322); wherein a through hole (34) is defined on a center part of the bottom portion (322); a tab (36) is formed around the through hole (34) of the bottom portion (322), and the tab (36) is thicker than a rest part of the bottom portion (322), wherein the rest part of the bottom portion (322) being the part of the bottom portion (322) other than the tab (36); a first object portion (pt1) is defined as a part of the bottom portion (322) comprising a boundary between the rest part of the bottom portion (322) and the tab (36), and a second object portion (pt2) is defined as a part of the main body portion (321) comprising an end portion on a side toward the bottom portion (322); a thickness of the first object portion (pt1) and a thickness of the second object portion (pt2) vary, and at least one of the first object portion (pt1) and the second object portion (pt2) comprises a spline curve (C1, C2); a radius of curvature of the spline curve (C1, C2) excludes a discontinuous point.

2. The flex spline (3) according to claim 1, wherein the radius of curvature of the spline curve (C1, C2) varies continuously over an entire length of the spline curve (C1, C2).

3. The flex spline (3) according to claim 2, wherein the spline curve (C1, C2) is represented by a function.

4. The flex spline (3) according to claim 3, wherein,
   two endpoints of the spline curve (C1, C2) are set as $P_0$ ($X_0$, $Y_0$) and $P_3$ ($X_3$, Y3), and two control points of the spline curve (C1, C2) are set as a first control point $P_1$ ($X_1$, $Y_1$) and a second control point $P_2$ ($X_2$, $Y_2$); coordinates of any one point (X, Y) on the spline curve (C1, C2) satisfy:

$$X = (1-t)^3 X_0 + 3t(1-t)^2 X_1 + 3t^2(1-t)X_2 + t^3 X_3$$

$$Y = (1-t)^3 Y_0 + 3t(1-t)^2 Y_1 + 3t^2(1-t)Y_2 + t^3 Y_3$$

where $t \in [0,1]$, and

$$X_1 = t_1 X_0 + (1-t_1)X_3$$

$$Y_1 = t_2 Y_0 + (1-t_2)Y_3$$

$$X_2 = t_3 X_0 + (1-t_3)X_3$$

$$Y_2 = t_4 Y_0 + (1-t_4)Y_3$$

   where $t_1$ ranges from 0.05 to 0.16, $t_2$ ranges from 0.85 to 0.96, $t_3$ ranges from 0.06 to 0.15, and $t_4$ ranges from 0.68 to 0.82.

5. The flex spline (3) according to claim 4, wherein $t_1$ ranges from 0.09 to 0.12, $t_2$ ranges from 0.92 to 0.96, $t_3$ ranges from 0.08 to 0.13, and $t_4$ ranges from 0.72 to 0.79.

6. The flex spline (3) according to claim 4, wherein a slope of $P_0$ is $B_0$, a slope of $P_1$ is $B_1$, a slope of $P_2$ is $B_2$, and a slope of $P_3$ is $B_3$; a slope of any point on the spline curve (C1, C2) is $B_t$, and $B_t$ satisfies:

$$B_t = (1-t)^3 B_0 + 3t(1-t)^2 B_1 + 3t^2(1-t)B_2 + t^3 B_3$$

where $t \in [0,1]$.

7. The flex spline (3) according to claim 6, wherein the slope of Po is 0.

8. The flex spline (3) according to claim 7, wherein the slope of $P_3$ is -tan(84.58°).

9. The flex spline (3) according to claim 5, wherein the spline curve (C1, C2) is tangent to a sidewall contour line of the rest part of the bottom portion (322).

10. The flex spline (3) according to claim 5 or 9, wherein the spline curve (C1, C2) is tangent to a sidewall contour line of the tab (36).

11. The flex spline (3) according to claim 1, wherein the radius of curvature of the spline curve (C1, C2) keeps same over an entire length of the spline curve (C1, C2).

12. A harmonic gear device (1), comprising:

    a circular spline (2), in an annular shape and having inner teeth (21);
    a flex spline (3) according to any one of claims 1 to 11, in an annular shape and having outer teeth (31); wherein the flex spline (3) is arranged on an inner side of the circular spline (2); and
    a wave generator (4), comprising a cam (41) and a bearing (42) arranged on an outer side of the cam (41); wherein the cam (41) is non-circularly shaped and rotatably driven with a rotation axis as a rotation center; the wave generator (4) is arranged on an inner side of the flex spline (3) to cause the flex spline (3) to flex; wherein the rotation axis passes through a through hole (34);
    wherein the harmonic gear device (1) deforms the flex spline (3) in conjunction with a rotation of the cam (41), causing some of the outer teeth (31) to mesh with some of the inner teeth (21), and the flex spline (3) to rotate relative to the circular spline (2) corresponding to a difference in teeth number between the flex spline (3) and the circular spline (2).

13. A joint device (130) for a robot, comprising:

    a harmonic gear device (1) according to claim 12;
    a first member (131) fixed to a circular spline (2); and
    a second member (132) fixed to a flex spline (3).

14. An industrial robot, comprising a harmonic gear device (1) according to claim 12.

15. A design method for a flex spline (3) according to any one of claims 1 to 11, comprising:

    (S100) calculating and obtaining coordinates of two endpoints for a spline curve;
    (S200) setting a plurality of control points, and setting a plurality of sets of coordinates for the plurality of control points;
    (S300) generating a plurality of spline curves with a spline curve theory; and
    (S400) calculating and obtaining one of the plurality of spline curves with a minimum stress by simulation.

FIG. 1A

FIG. 1B

FIG. 2A

FIG. 2B

FIG. 3A

FIG. 3B

FIG. 4

FIG. 5

FIG. 6

322

S1

C10

Pt1

36 C1

S2

P3

P2

P1

P0

Y

X

FIG. 7

FIG. 8

FIG. 9

FIG. 10

two-segment arc

Bezier curve

Reduced by
4.9%

FIG. 11

FIG. 12

FIG. 13

FIG. 14

FIG. 15

FIG. 16

FIG. 17

FIG. 18

FIG. 19

calculating and obtaining coordinates of two endpoints for a spline curve — S100

setting multiple control points, and setting multiple sets of coordinates for the multiple control points — S200

generating multiple the spline curves with a spline curve theory — S300

calculating and obtaining one of the multiple spline curves with a minimum stress by simulation — S400

FIG. 20

Europäisches
Patentamt

European
Patent Office

Office européen
des brevets

# EUROPEAN SEARCH REPORT

Application Number

EP 24 18 5664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/060473 A1 (LI SHUTING [JP]) 13 March 2008 (2008-03-13) | 1-12,15 | INV. F16H49/00 |
| A | * figures 1-4 * | 13,14 | |
| X | CN 113 324 008 B (UNIV JIANGSU SCIENCE & TECH) 14 June 2022 (2022-06-14) | 1-12,15 | |
| A | * figures 1-5 * | 13,14 | |
| X | US 5 850 765 A (SHIRASAWA NAOMI [JP]) 22 December 1998 (1998-12-22) * figures 2, 3 * | 1-12,15 | |
| X | US 6 202 508 B1 (TAKIZAWA NOBORU [JP]) 20 March 2001 (2001-03-20) | 1-12,15 | |
| A | * figures 1-7 * | 13,14 | |
| X | CN 104 747 660 A (SHANGHAI XINJUN TRANSMISSION SCIENCE & TECHNOLOGY CO LTD) 1 July 2015 (2015-07-01) | 1-12,15 | |
| A | * figures 1-4 * | 13,14 | |

TECHNICAL FIELDS
SEARCHED    (IPC)

F16H

The present search report has been drawn up for all claims

| Place of search | Date of completion of the search | Examiner |
|---|---|---|
| Munich | 22 October 2024 | Szodfridt, Tamas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 5664

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | | Publication date |
|---|---|---|---|---|
| US 2008060473 A1 | 13-03-2008 | CN | 101031737 A | 05-09-2007 |
| | | EP | 1813836 A1 | 01-08-2007 |
| | | JP | 2006097861 A | 13-04-2006 |
| | | KR | 20070073756 A | 10-07-2007 |
| | | TW | 200613662 A | 01-05-2006 |
| | | US | 2008060473 A1 | 13-03-2008 |
| | | WO | 2006035907 A1 | 06-04-2006 |
| CN 113324008 B | 14-06-2022 | NONE | | |
| US 5850765 A | 22-12-1998 | DE | 69612597 T2 | 29-05-2002 |
| | | EP | 0770794 A1 | 02-05-1997 |
| | | JP | 3768261 B2 | 19-04-2006 |
| | | JP | H08312730 A | 26-11-1996 |
| | | US | 5850765 A | 22-12-1998 |
| | | WO | 9636822 A1 | 21-11-1996 |
| US 6202508 B1 | 20-03-2001 | DE | 69723291 T2 | 22-04-2004 |
| | | EP | 0942197 A1 | 15-09-1999 |
| | | US | 6202508 B1 | 20-03-2001 |
| | | WO | 9918364 A1 | 15-04-1999 |
| CN 104747660 A | 01-07-2015 | NONE | | |

EPO FORM P0459

For more details about this annex : see Official Journal of the European Patent Office, No. 12/82

**EP 4 488 550 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017141856 A